# EUROPEAN PATENT APPLICATION

(11) **EP 4 509 759 A1**
(43) Date of publication of application: **19.02.2025**
(21) Application number: 23803207.2
(22) Date of filing: 16.02.2023
(51) Int. Cl.: F23G 5/46, F23G 5/50, B01D 53/14, B01D 53/62, B01D 53/78, F23J 15/00, F23J 15/06

(54) **POWER GENERATION FACILITY, EXHAUST GAS TREATMENT SYSTEM, AND EXHAUST GAS TREATMENT METHOD**

(30) Priority: 13.05.2022 JP 2022079735
(71) Applicant: Mitsubishi Heavy Industries, Ltd., Tokyo 100-8332 (JP)
(72) Inventor: DAIMARU Takuichiro, Tokyo 100-8332 (JP); KATSUKI Norito, Tokyo 100-8332 (JP); SUGIURA Takuya, Tokyo 100-8332 (JP); TSUJIUCHI Tatsuya, Tokyo 100-8332 (JP); SHINDO Yoshitaka, Tokyo 100-8332 (JP); IMADA Junji, Tokyo 100-8332 (JP); MATSUI Naoya, Tokyo 100-8332 (JP)
(74) Representative: Studio Torta S.p.A.
(86) International application number: PCT/JP2023/005523
(87) International publication number: WO 2023/218717

(57) **Abstract**

A power generation facility of the present disclosure generates power by incinerating materials to be incinerated, and comprises: an incinerator in which materials to be incinerated are incinerated; a boiler to which exhaust gas generated in the incinerator is supplied; a carbon dioxide recovery device into which the exhaust gas flows after passing through the boiler; an exhaust gas flow path provided between the boiler and the carbon dioxide recovery device; an adjustment device capable of regulating the flow rate of the exhaust gas flowing through the exhaust gas flow path to a target flow rate, and capable of regulating the temperature of the exhaust gas to a target temperature; a sensor provided to the power generation apparatus; and a control device that controls the adjustment device on the basis of detection results of the sensor.

## Description

### Technical Field

The present disclosure relates to a power generation facility, an exhaust gas treatment system, and an exhaust gas treatment method.

This application claims priority to Japanese Patent Application No. 2022-079735, filed in Japan on May 13, 2022, the contents of which are incorporated herein by reference.

### Background Art

In the field of power generation facilities that incinerate waste, there is a technology of recovering carbon dioxide from exhaust gas discharged from an incinerator. For example, PTL 1 discloses a waste incineration facility in which a carbon dioxide-concentrated gas is generated in an exhaust gas treatment device into which exhaust gas from a waste incinerator is introduced, the carbon dioxide-concentrated gas is compressed to remove water, and the carbon dioxide-concentrated gas from which the water has been removed is led to an ash treatment unit to be used for treatment of ash.

### Citation List

### Patent Literature

[PTL 1] Japanese Patent No. 6826850

### Summary of Invention

### Technical Problem

Meanwhile, in a facility for recovering carbon dioxide from exhaust gas, power and heat are required in the recovery of carbon dioxide. Therefore, a technology for more efficiently operating the vehicle is required. In addition, at the same time, there is a demand for stable recovery of carbon dioxide from the exhaust gas.

The present disclosure has been made to solve the above-described problems, and an object of the present disclosure is to provide a power generation facility, an exhaust gas treatment system, and an exhaust gas treatment method that can more efficiently operate while stably recovering carbon dioxide in exhaust gas.

### Solution to Problem

The present disclosure relates to a power generation facility that incinerates materials to be incinerated to generate power, the power generation facility including an incinerator in which the materials to be incinerated are incinerated, a boiler into which exhaust gas generated in the incinerator is supplied, a carbon dioxide recovery device into which the exhaust gas that has passed through the boiler flows, an exhaust gas flow path provided between the boiler and the carbon dioxide recovery device, an adjustment device configured to adjust a flow rate of the exhaust gas flowing through the exhaust gas flow path to a target flow rate and adjust a temperature of the exhaust gas to a target temperature, a sensor provided in the power generation facility, and a control device that controls the adjustment device based on a detection result of the sensor.

The present disclosure relates to an exhaust gas treatment system provided as a part of a facility in which exhaust gas is generated, the exhaust gas treatment system including an exhaust gas flow path through which the exhaust gas generated by the facility flows, a carbon dioxide recovery device into which the exhaust gas that has flowed through the exhaust gas flow path flows, an adjustment device configured to adjust a flow rate of the exhaust gas flowing through the exhaust gas flow path to a target flow rate and adjust a temperature of the exhaust gas flowing through the exhaust gas flow path to a target temperature, and a control device that controls the adjustment device based on a detection result of a sensor provided in the facility.

The present disclosure relates to an exhaust gas treatment method used for a facility in which exhaust gas is generated, the facility including an exhaust gas flow path through which the exhaust gas flows, a carbon dioxide recovery device into which the exhaust gas that has flowed through the exhaust gas flow path flows, and an adjustment device configured to adjust a flow rate of the exhaust gas flowing through the exhaust gas flow path to a target flow rate and adjust a temperature of the exhaust gas flowing through the exhaust gas flow path to a target temperature, and the exhaust gas treatment method including controlling the adjustment device based on a detection result of a sensor provided in the facility.

### Advantageous Effects of Invention

According to the present disclosure, it is possible to provide a power generation facility, an exhaust gas treatment system, and an exhaust gas treatment method that can more efficiently operate while stably recovering carbon dioxide in exhaust gas.

### Brief Description of Drawings

Fig. 1 is a diagram showing a configuration of a power generation facility according to a first embodiment of the present disclosure.
Fig. 2 is a diagram schematically showing a temperature change of the exhaust gas flowing through the exhaust gas flow path according to the first embodiment of the present disclosure.
Fig. 3 is a functional block diagram of a control device according to the first embodiment of the present disclosure.
Fig. 4 is a flowchart illustrating an example of the operation of the control device according to the first embodiment of the present disclosure.
Fig. 5 is a flowchart illustrating an example of the operation of the control device according to the first embodiment of the present disclosure.
Fig. 6 is a flowchart illustrating an example of the operation of the control device according to the first embodiment of the present disclosure.
Fig. 7 is a flowchart illustrating an example of the operation of the control device according to the first embodiment of the present disclosure.
Fig. 8 is a flowchart illustrating an example of the operation of the control device according to the first embodiment of the present disclosure.
Fig. 9 is a flowchart showing the exhaust gas treatment method according to the first embodiment of the present disclosure.
Fig. 10 is a diagram showing a configuration of a power generation facility according to a second embodiment of the present disclosure.
Fig. 11 is a functional block diagram of a control device according to a second embodiment of the present disclosure.
Fig. 12 is a flowchart illustrating an example of the operation of the control device according to the second embodiment of the present disclosure.
Fig. 13 is a diagram showing a configuration of a power generation facility according to a third embodiment of the present disclosure.
Fig. 14 is a functional block diagram of a control device according to the third embodiment of the present disclosure.
Fig. 15 is a flowchart illustrating an example of the operation of the control device according to the third embodiment of the present disclosure.
Fig. 16 is a diagram showing a configuration of a power generation facility according to a fourth embodiment of the present disclosure.
Fig. 17 is a functional block diagram of a control device according to the fourth embodiment of the present disclosure.
Fig. 18 is a flowchart illustrating an example of the operation of the control device according to the fourth embodiment of the present disclosure.
Fig. 19 is a graph showing a relationship between the power generation terminal output and the power transmission terminal output in the power generation facility according to the embodiment of the present disclosure.
Fig. 20 is a hardware configuration diagram illustrating a configuration of a computer according to the embodiment of the present disclosure.

### Description of Embodiments

Hereinafter, embodiments for carrying out a power generation facility, an exhaust gas treatment system, and an exhaust gas treatment method according to the present disclosure will be described with reference to the accompanying drawings.

### [First embodiment]

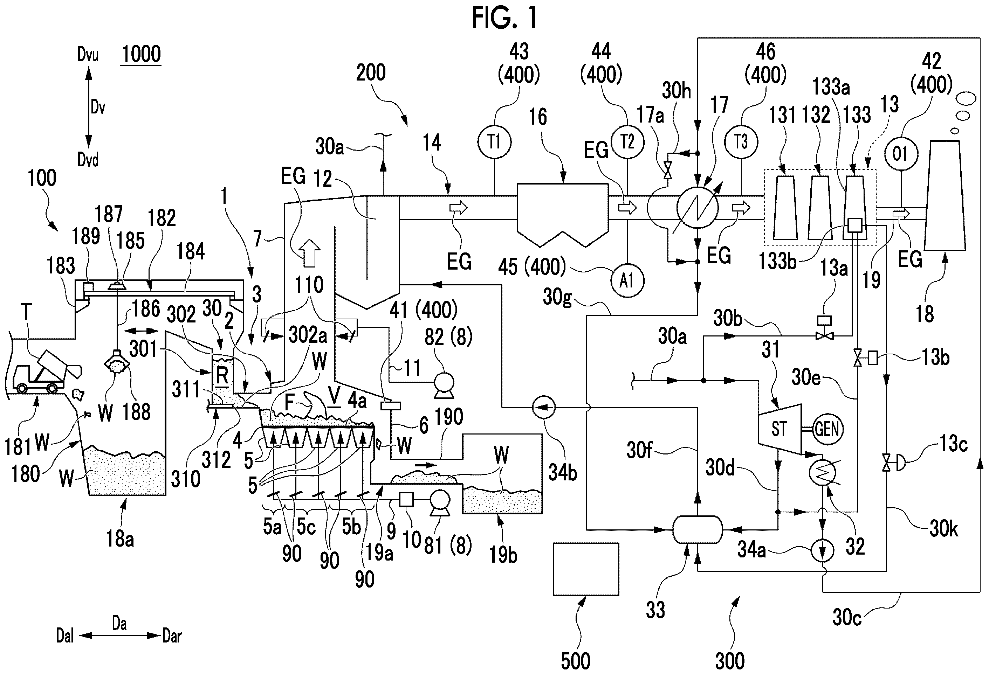

The power generation facility is, for example, a plant that performs incineration treatment on municipal solid waste, industrial waste, biomass, or the like as materials to be incinerated, and performs waste power generation by using heat of exhaust gas generated by performing incineration treatment on the materials to be incinerated. Hereinafter, for convenience of description, the materials to be incinerated will be referred to as "waste". The waste in the present embodiment is fuel for generating a combustion reaction in the incinerator. As shown in Fig. 1, the power generation facility 1000 includes a waste treatment system 100, an exhaust gas treatment configuration 200, a power generation system 300, a sensor 400, and a control device 500.

### (Waste treatment system)

The waste treatment system 100 is a system that performs incineration treatment on the waste W in the power generation facility 1000. The waste treatment system 100 includes an incinerator 1, a waste pit 18a, an ash extrusion device 19a, and an ash pit 19b.

### (Incinerator)

The incinerator 1 according to this embodiment is a stoker type incinerator. The incinerator 1 is a furnace that combusts the waste W while transporting the waste W inside the incinerator 1. Exhaust gas EG is generated from the incinerator 1 with the combustion of the waste W by the incinerator 1. The generated exhaust gas EG is sent to an exhaust gas treatment configuration 200 connected to the upper part of the incinerator 1. The incinerator 1 includes a furnace main body 2, a fuel supply mechanism 3, a stoker 4, a wind box 5, a discharge chute 6, a furnace 7, a forced draft fan 8, a primary air line 9, an air preheater 10, a secondary air line 11, a primary air damper 90, and a secondary air damper 110.

The furnace main body 2 is a body portion in the incinerator 1. The furnace main body 2 defines a treatment space V for combusting the waste W therein. In the treatment space V, the waste W is transported in the transfer direction Da (the left-right direction in Fig. 1) while being burned. The waste W incinerated in the treatment space V is discharged to the outside of the furnace main body 2 through the discharge chute 6. Hereinafter, for convenience of description, a side (left side in Fig. 1) from the discharge chute 6 toward the fuel supply mechanism 3 in the transfer direction Da will be referred to as "one side Dal". In addition, a side (right side in Fig. 1) into which the waste W is transported on a side opposite to the one side Dal is referred to as "another side Dar".

The fuel supply mechanism 3 is a mechanism that receives the waste W from the outside of the incinerator 1 and supplies the received waste W into the treatment space V inside the furnace main body 2. The fuel supply mechanism 3 in the present embodiment has a hopper 30 and a feeder 310. The hopper 30 is an inlet of the incinerator 1 for supplying the waste W into the furnace main body 2. The waste W is put into the hopper 30 from the outside of the incinerator 1 by a crane 182. The hopper 30 has an inlet portion 301 and an outlet portion 302.

The inlet portion 301 is an inlet portion of the hopper 30 into which the waste W enters from the outside. The inlet portion 301 guides the waste W supplied from the upper side in the vertical direction Dv to the lower side outlet portion 302. The inlet portion 301 has a tubular shape extending in the vertical direction Dv. The outlet portion 302 is connected to a lower portion of the inlet portion 301. Therefore, the waste W that is put into the inlet portion 301 falls downward on the lower side due to gravity. Hereinafter, for convenience of description, the upper side Dvd (upper side in Fig. 1) in the vertical direction Dv will be simply referred to as an "upper side Dvd". In addition, a side opposite to the upper side Dvd (lower side in Fig. 1) will be simply referred to as a "lower side Dvu".

The outlet portion 302 is an outlet portion of the hopper 30 that guides the waste W put into the inlet portion 301 to the treatment space V inside the furnace main body 2. The outlet portion 302 defines a temporary storage space R for temporarily storing the waste W before the waste W is supplied into the treatment space V inside the furnace main body 2. The outlet portion 302 in the present embodiment has a box shape extending in the transfer direction Da.

The feeder 310 is a device that supplies the waste W in the hopper 30 into the treatment space V inside the furnace main body 2. The feeder 310 is disposed to be movable back and forth in the transfer direction Da with respect to a floor surface 302a of the inner surface of the outlet portion 302 facing the upper side Dvd. An end portion of the feeder 310 on the one side Dal is connected to a feeder driving mechanism (not illustrated) that causes the feeder 310 to move back and forth by using hydraulic pressure or the like. The feeder 310 is capable of moving back and forth in the storage space R in the transfer direction Da via this feeder driving mechanism. That is, the feeder 310 can move forward and backward on the floor surface 302a of the outlet portion 302 between one side Dal and the other side Dar.

The feeder 310 has a plate shape extending in the transfer direction Da and in the furnace width direction Dw and having a predetermined thickness. The feeder 310 has an upper surface 311 facing the upper side Dvd and an extrusion surface 312 connected to the upper surface 311 and facing the other side Dar. Hereinafter, for convenience of description, a width direction of the furnace main body 2, which is a direction perpendicular to each of the transfer direction Da and the vertical direction Dv, will be referred to as a "furnace width direction Dw".

The upper surface 311 is a surface on which the waste W supplied from the inlet portion 301 is deposited. The extrusion surface 312 is a surface that extrudes the waste W deposited on the floor surface 302a to the other side Dar. That is, the feeder 310 moves back and forth in the transfer direction Da at a predetermined time, and thus the feeder 310 intermittently extrudes the waste W in the storage space R toward the treatment space V.

The waste W in the present embodiment is compacted inside the storage space R. The waste W in the storage space R has viscosity and can be regarded as one continuum that moves in the transfer direction Da as a whole in the storage space R. That is, the waste W on the upper surface 311 of the feeder 310 and the waste W on the floor surface 302a of the outlet portion 302 are integrated in the storage space R. Therefore, the extrusion surface 312 of the feeder 310 extrudes the waste W to the treatment space V side, so that the waste W deposited on the upper surface 311 is also moved to the treatment space V side in conjunction with the extrusion.

The forward and backward movement of the feeder 310 in the transfer direction Da in the present embodiment is controlled by the control device 500. Specifically, the feeder 310 receives a signal indicating an instruction related to the forward and backward movement from the control device 500. That is, the feeder 310 reciprocates on the floor surface 302a of the outlet portion 302 based on the instruction indicated by the signal. The instruction related to the advancing and retreating described here is, for example, an interval between the amount of the advancing and retreating of the feeder 310 from the reference position, the advancing and retreating speed, and the timing at which the advancing and retreating is started. Therefore, the feeder 310 functions as an adjustment device that can adjust the supply state of the waste W by being controlled by the control device 500.

In addition, the feeder 310 can transmit a signal indicating the amount of its own movement forward and backward from the reference position (hereinafter, simply referred to as a "forward and backward amount"), a forward and backward speed, and an interval of a timing at which the forward and backward movement is started, to the control device 500 through wired communication or wireless communication at a predetermined time interval. That is, the feeder 310 can transmit the state information thereof to the control device 500. The feeder 310 according to this embodiment transmits the amount of movement to the control device 500 as the state information of the feeder 310.

The stoker 4 is configured with a plurality of fire grates (not illustrated), and the plurality of fire grates form a stoker surface 4a into which the waste W is supplied in a layered manner by the fuel supply mechanism 3. The fire grates are composed of a fixed fire grate (not shown) and a movable fire grate (not shown).

The fixed fire grate is fixed to a surface of the wind box 5 facing the upper side Dvd of the wind box 5. The movable fire grate moves to the one side Dal (upstream side) and the other side Dar (downstream side) at a constant speed, so that the movable fire grate transfers the waste W on the movable fire grate and on the fixed fire grate (on the stoker surface) to the downstream side while stirring and mixing the waste W. The stoker 4 transfers the waste W supplied in a layered manner to the stoker surface 4a to the discharge chute 6 while combusting the waste W.

The furnace main body 2 has a drying stage 5a, a combustion stage 5b, and a post-combustion stage 5c in order from the one side Dal. The drying stage 5a, the combustion stage 5b, and the post-combustion stage 5c divide the treatment space V in the transfer direction Da. The drying stage 5a is a region in which the waste W supplied from the hopper 30 is dried on the stoker 4 before combustion.

The combustion stage 5b and the post-combustion stage 5c are regions where the dry waste W is burned on the stoker 4. In the combustion stage 5b, the diffusion combustion by the thermal decomposition gas generated from the waste W occurs, and the bright flame F occurs. In the post-combustion stage 5c, fixed carbon combustion of the waste W after diffusion combustion occurs, and thus the bright flame F does not occur. Therefore, the bright flame F resulting from combustion is mainly formed in the combustion stage 5b.

The wind box 5 supplies combustion air into the treatment space V from below the stoker 4. A plurality of the wind boxes 5 are arranged in the transfer direction Da. In the present embodiment, the wind box 5 divides the drying stage 5a, the combustion stage 5b, and the post-combustion stage 5c in the furnace main body 2.

The discharge chute 6 is a device that causes the waste W that has been burned and has become ash to fall to the ash extrusion device 19a positioned on the lower side Dvu with respect to the furnace main body 2. The discharge chute 6 is provided at an end portion of the post-combustion stage 5c on the other side Dar.

The furnace 7 extends from the upper part of the furnace main body 2 toward the upper side Dvd. The exhaust gas EG generated by the combustion of the waste W in the treatment space V is sent to the exhaust gas treatment configuration 200 through the furnace 7.

The forced draft fan 8 is a device that pressurizes air for burning the waste W in the treatment space V toward the inside of the incinerator 1. The forced draft fan 8 has a first forced draft fan 81 and a second forced draft fan 82. The first forced draft fan 81 pumps the combustion air toward the wind box 5 through the primary air line 9. The second forced draft fan 82 pumps the combustion air toward the furnace 7 through the secondary air line 11.

The rotation speed (the flow rate of the air to be pressurized) of the first forced draft fan 81 in the present embodiment is controlled by the control device 500. Specifically, the first forced draft fan 81 receives a signal indicating the rotation speed from the control device 500 through wired communication or wireless communication. The first forced draft fan 81 is rotated based on the rotation speed indicated by the signal and sends air to the treatment space V under pressure.

Therefore, the first forced draft fan 81 functions as an adjustment device that can adjust the flow rate of the combustion air supplied into the treatment space V through the primary air line 9 under the control of the control device 500. In addition, the first forced draft fan 81 transmits a signal indicating an output rotation speed of the first forced draft fan 81 to the control device 500 through wired communication or wireless communication at a predetermined time interval. That is, the first forced draft fan 81 transmits the output rotation speed to the control device 500 as the state information of the first forced draft fan 81.

The primary air line 9 connects the first forced draft fan 81 and the wind box 5. The first forced draft fan 81 is driven, so that the air necessary for the combustion of the waste W is supplied into the wind box 5 through the primary air line 9. The air supplied into the wind box 5 goes toward the waste W from below the stoker 4. Hereinafter, for convenience of description, the air supplied into the furnace main body 2 through the primary air line 9 is referred to as "combustion air".

Here, the primary air damper 90 is disposed in the primary air line 9. Here, the term "in the primary air line 9" means "in the middle of the primary air line 9" instead of "inside the primary air line 9". The primary air damper 90 can adjust the flow rate of the combustion air flowing in the primary air line 9 by adjusting the opening degree of the damper. The opening degree of the primary air damper 90 in the present embodiment is controlled by the control device 500. Specifically, the primary air damper 90 receives a signal indicating the opening degree from the control device 500 through wired communication or wireless communication.

The primary air damper 90 adjusts the flow rate of the combustion air flowing through the primary air line 9 based on the opening degree indicated by the signal. Therefore, the primary air damper 90 functions as an adjustment device that can adjust the flow rate of the combustion air supplied into the treatment space V through the primary air line 9 by being controlled by the control device 500. In addition, the primary air dampers 90 transmit a signal indicating the opening degree thereof to the control device 500 through wired communication or wireless communication at a predetermined time interval. That is, the primary air dampers 90 transmit the opening degree as the state information to the control device 500.

The air preheater 10 is a heat exchanger that preheats the air pumped from the first forced draft fan 81. The air preheater 10 is disposed in the primary air line 9 and heats the combustion air flowing in the primary air line 9 from the first forced draft fan 81 toward the wind box 5. The combustion air heated by the air preheater 10 is supplied into the treatment space V, is used for burning the waste W, is mixed with the exhaust gas EG generated in the treatment space V due to the burning of the waste W, and is subjected to heat exchange with the exhaust gas EG.

The set temperature (preheating temperature) of the air preheater 10 in the present embodiment is controlled by the control device 500. Specifically, the air preheater 10 receives a signal indicating the set temperature from the control device 500 through wired communication or wireless communication. The air preheater 10 preheats the combustion air based on the temperature indicated by the signal. Therefore, the air preheater 10 functions as an adjustment device that can adjust the temperature of the combustion air flowing through the primary air line 9 by being controlled by the control device 500. In addition, the air preheater 10 transmits a signal indicating the set temperature of the air preheater 10 to the control device 500 through wired communication or wireless communication at a predetermined time interval. That is, the air preheater 10 transmits the set temperature and the state information of the air preheater 10 to the control device 500.

The secondary air line 11 connects the second forced draft fan 82 and the furnace 7. The second forced draft fan 82 is driven, so that the air necessary for the combustion of the waste W is supplied into the furnace 7 through the secondary air line 11. The secondary air supplied into the furnace 7 is directed to the waste W from above the stoker 4. Here, the secondary air dampers 110 are disposed in the secondary air line 11. The term "in the secondary air line 11" as used herein means a part of the secondary air line 11, not the inside of the secondary air line 11. The secondary air damper 110 can adjust the flow rate of the combustion air flowing through the secondary air line 11 by adjusting the opening degree of the damper.

### (Waste pit)

The waste pit 18a stores the waste W and supplies the waste W into the inlet portion 301 of the hopper 30. The waste pit 18a includes a waste pit main body 180, a platform 181, a crane 182, and a crane control device 189. The waste pit main body 180 is a chamber that stores the waste W on the one side Dal with respect to the incinerator 1. The waste pit main body 180 is connected to the inlet portion 301 of the hopper 30. That is, the inside of the hopper 30 and the inside of the waste pit main body 180 communicate with each other, and the waste W can be supplied from the inside of the waste pit main body 180 to the inside of the hopper 30.

The platform 181 is an inlet port for carrying the waste W into the waste pit main body 180. The platform 181 is connected to a carry-in opening portion formed on the one side Dal of the waste pit main body 180. For example, the waste collecting vehicle T is transported to the platform 181 from the outside of the power generation facility 1000. The waste collecting vehicle T throws the carried waste W into the inside of the waste pit main body 180. The crane 182 grips a part of the waste W stored in the waste pit main body 180 and transfers the gripped waste W from the waste pit main body 180 to the inlet portion 301 of the hopper 30. The crane 182 is provided on a ceiling portion of the upper side Dvd of the waste pit main body 180.

The crane 182 includes a rail 183 provided on the ceiling, a girder 184 running along the rail 183, a trolley 185 traversing on the girder 184, a wire 186 suspended from the trolley 185, a winch 187 that winds up and winds down the wire 186, and a grapple 188 attached to a tip of the wire 186. The crane control device 189 is a device that controls the running of the girder 184, the traverse of the trolley 185, the winding up and the winding down of the wire 186 via the winch 187, and the gripping operation of the grapple 188.

### (Ash extrusion device)

The ash extrusion device 19a is a device that receives the waste W (ash) falling from the furnace main body 2 to the lower side Dvu through the discharge chute 6 and pushes the waste W into the subsequent ash pit 19b. The ash extrusion device 19a has an extrusion device main body 190 and an extrusion mechanism (not illustrated). The extrusion device main body 190 receives the waste W that has been burned in the treatment space V and has turned into ash, and temporarily deposits the waste W. The extrusion device main body 190 is disposed on the lower side Dvu with respect to the furnace main body 2. The extrusion device main body 190 is connected to the discharge chute 6 from the lower side Dvu. The extrusion mechanism extrudes the waste W (ash) that has fallen into the extrusion device main body 190 toward the ash pit 19b.

### (Ash pit)

The ash pit 19b is a chamber that receives the waste W in the extrusion device and stores the waste W therein. The ash pit 19b in the present embodiment is connected to the extrusion device main body 190 from the other side Dar. The waste W stored in the ash pit 19b is transferred to the outside of the power generation facility 1000 by, for example, an ash crane (not shown).

### (Exhaust gas treatment configuration)

The exhaust gas treatment configuration 200 is a system that treats the exhaust gas EG generated in the waste treatment system 100. The exhaust gas treatment configuration 200 includes the boiler 12, the exhaust gas flow path 14, the dust collecting device 16, the heat recovery unit 17, the carbon dioxide recovery device 13, the chimney 18, and the outlet flow path 19.

### (Boiler)

The boiler 12 is a device that heats supplied water to generate steam by performing heat exchange between the supplied water (water supply) and the exhaust gas EG introduced from the furnace 7 in the waste treatment system 100. The boiler 12 according to this embodiment recovers heat from the exhaust gas EG from the furnace 7 and generates steam (main steam) for driving the steam turbine 31 of the power generation system 300 by using the heat.

Although details are not shown, the boiler 12 is configured with a boiler outer frame and a plurality of devices disposed in the boiler outer frame. Examples of the plurality of devices include a heat exchanger, a heater, and an evaporator. In the devices disposed in the boiler outer frame, the exhaust gas EG from the furnace 7 is sequentially introduced. The exhaust gas EG introduced into each device is cooled by being subjected to heat exchange with the water introduced from the outside. On the other hand, the water introduced into the boiler 12 is heated by the exhaust gas EG to become steam.

### (Exhaust gas flow path)

The exhaust gas EG, which has finished heat exchange in the boiler 12, is circulated inside the exhaust gas flow path 14. One end of the exhaust gas flow path 14 is connected to an exhaust gas outlet of the boiler 12. Another end of the exhaust gas flow path 14 is connected to the carbon dioxide recovery device 13.

### (Dust collecting device)

The dust collecting device 16 according to this embodiment is a catalyst-supported bag filter capable of removing (collecting) soot or dust contained in the exhaust gas EG flowing through the exhaust gas flow path 14, removing (denitrating) nitrogen oxides, and removing harmful substances such as dioxins. The dust collecting device 16 is disposed between the boiler 12 and the carbon dioxide recovery device 13 in the exhaust gas flow path 14. Here, the term "in the exhaust gas flow path 14" means a partway of the exhaust gas flow path 14, not the inside of the exhaust gas flow path 14. Therefore, the exhaust gas EG that has flowed out from the boiler 12 flows into the dust collecting device 16. The harmful substances-removed exhaust gas EG by the dust collecting device 16 flows into the exhaust gas flow path 14 again.

### (Heat recovery unit)

The heat recovery unit 17 is a device (heat exchanger) that recovers heat of the exhaust gas EG by performing heat exchange between the exhaust gas EG flowing through the exhaust gas flow path 14 and a heat medium introduced from the outside. The heat recovery unit 17 according to this embodiment is an economizer. The heat recovery unit 17 is disposed between the dust collecting device 16 and the carbon dioxide recovery device 13 in the exhaust gas flow path 14. Therefore, the exhaust gas EG from the dust collecting device 16 flows into the heat recovery unit 17. The heat medium supplied from the outside to the heat recovery unit 17 in the present embodiment is water (water supply). The exhaust gas EG that has finished the heat exchange in the heat recovery unit 17 flows out to the exhaust gas flow path 14 again.

### (Carbon dioxide recovery device)

The carbon dioxide recovery device 13 recovers carbon dioxide from the exhaust gas EG flowing through the exhaust gas flow path 14. The exhaust gas EG flowing out from the heat recovery unit 17 flows into the carbon dioxide recovery device 13. The carbon dioxide recovery device 13 according to this embodiment includes a cooling tower 131, an absorption tower 132, and a regeneration tower 133.

The cooling tower 131 is a device that cools the exhaust gas EG from the heat recovery unit 17. Although detailed illustration is omitted, the cooling tower 131 in the present embodiment includes a circulation line that circulates cooling tower circulating water, a pump, and a heat exchanger that cools the cooling tower circulating water by performing heat exchange with cooling water introduced from the outside, and allows the cooling tower circulating water cooled with the cooling water to come into contact with the exhaust gas EG to cool this exhaust gas EG. That is, the exhaust gas EG that has flowed into the cooling tower 131 is cooled by being subjected to heat exchange with the cooling tower circulating water. The exhaust gas EG cooled by the cooling tower 131 is guided to the absorption tower 132.

The absorption tower 132 is a device that removes carbon dioxide from the exhaust gas EG introduced into the carbon dioxide recovery device 13 by using an absorbing liquid (amine absorbing liquid). The exhaust gas EG from the cooling tower 131 is introduced into the absorption tower 132. Inside the absorption tower 132, the absorbing liquid is scattered from the upper part to the lower part. The absorbing liquid scattered inside the cooling tower 131 comes into contact with the exhaust gas EG to absorb carbon dioxide in the exhaust gas EG. The exhaust gas EG from which carbon dioxide has been removed inside the absorption tower 132 is sent to the chimney 18 through the outlet flow path 19 connected to the absorption tower 132, and is discharged to the atmosphere from the chimney 18. On the other hand, the absorbing liquid that has absorbed carbon dioxide is guided to the regeneration tower 133.

The regeneration tower 133 is a device that heats the absorbing liquid from the absorption tower 132 and separates carbon dioxide from the absorbing liquid. The regeneration tower 133 separates carbon dioxide from the absorbing liquid to regenerate the absorbing liquid. The regeneration tower 133 includes a regeneration tower main body 133a and a reboiler 133b. The regeneration tower main body 133a has a filling layer or a tray therein. The absorbing liquid in which carbon dioxide has been absorbed is introduced into the space in the inside of the regeneration tower main body 133a from the absorption tower 132 via the absorbing liquid supply pipe.

The reboiler 133b is connected to the lower part of the regeneration tower main body 133a, for example, through a pipe. A heat medium for heating the absorbing liquid is introduced into the reboiler 133b from the outside. The heat medium supplied from the outside to the reboiler 133b in the present embodiment is steam (main steam or extraction steam). The absorbing liquid that has flowed into the inside of the regeneration tower main body 133a is heated by being subjected to heat exchange with the heat medium. The carbon dioxide is separated from the absorbing liquid by heating the absorbing liquid inside the regeneration tower main body 133a. The carbon dioxide separated from the absorbing liquid is guided to the outside of the carbon dioxide recovery device 13. The absorbing liquid from which carbon dioxide has been separated is guided to the absorption tower 132 again. The steam as the heat medium that is cooled by heating the absorbing liquid is condensed water. The condensed water is guided to the power generation system 300.

Here, for example, in a temperature range of 130°C to 160°C, a pressure of 0.27 MPaA to 0.62 MPaA needs to be maintained in the heat medium of the gas introduced into the reboiler 133b. Hereinafter, this pressure range (0.27 MPaA to 0.62 MPaA) in this temperature range (130°C to 160°C) is referred to as a "minimum required pressure".

### (Power generation system)

The power generation system 300 is a system that performs power generation by using the heat of the exhaust gas EG generated in the waste treatment system 100. The power generation system 300 includes a steam turbine 31, a condenser 32, a deaerator 33, a first water supply pump 34a, a second water supply pump 34b, various lines, and various valves.

The various lines described above include a main steam line 30a, a first line 30b, a first connection line 30c (connection line), a second connection line 30g, a water supply bypass line 30h, an extraction steam line 30d, a second line 30e, a boiler water supply line 30f, and a condensation water line 30k. In addition, the various valves described above include a heat medium valve 17a, a first valve 13a, a second valve 13b, and a third valve 13c.

### (Steam turbine)

The steam turbine 31 is a rotary machine that is driven by steam from the boiler 12 and rotates a generator GEN connected to the steam turbine 31. In the steam turbine 31 according to this embodiment, the steam generated in the boiler 12 is introduced through the main steam line 30a. The main steam line 30a connects the steam outlet of the boiler 12 and the steam inlet of the steam turbine 31.

The first line 30b connected to the reboiler 133b of the regeneration tower 133 in the carbon dioxide recovery device 13 is connected to the main steam line 30a. The steam from the boiler 12 flowing through the main steam line 30a is introduced into the reboiler 133b through the first line 30b. The steam introduced into the reboiler 133b is used as a heat medium for heating the absorbing liquid in the regeneration tower main body 133a.

The first valve 13a is disposed in the first line 30b. The first valve 13a is a flow rate regulation valve capable of adjusting a flow rate of the steam flowing through the first line 30b. The first valve 13a controls the opening degree to adjust the flow rate of the steam flowing through the first line 30b. The opening degree of the first valve 13a in the present embodiment is controlled by the control device 500. Specifically, the first valve 13a receives a signal indicating the opening degree from the control device 500 through wired communication or wireless communication and adjusts the opening degree based on the received signal.

### (Condenser)

The condenser 32 is connected to the steam turbine 31. The steam that has finished the expansion work in the steam turbine 31 is guided into the condenser 32, cooled, and condensed into water (recovered water), and the water is stored in the condenser 32. The water stored in the condenser 32 is guided to the heat recovery unit 17 as a heat medium for performing heat exchange with the exhaust gas EG in the heat recovery unit 17 through the first connection line 30c.

Here, the first connection line 30c connects the condenser 32 and the heat recovery unit 17. The first water supply pump 34a is disposed in the first connection line 30c. Here, the "inside the first connection line 30c" means "in the middle of the first connection line 30c" instead of "inside the first connection line 30c". The first water supply pump 34a is driven to send the water from the condenser 32 to the heat recovery unit 17. The water introduced into the heat recovery unit 17 through the first connection line 30c is heat-exchanged with the exhaust gas EG in the heat recovery unit 17 and is heated by the exhaust gas EG. The water heated in the heat recovery unit 17 is guided to the deaerator 33 through the second connection line 30g.

One end of the water supply bypass line 30h is connected to the first connection line 30c, and another end thereof is connected to the second connection line 30g. Therefore, a part of the water flowing through the first connection line 30c can flow into the water supply bypass line 30h from one end and can flow into the second connection line 30g through the other end. Therefore, the water supply bypass line 30h can bypass water from the first connection line 30c to the second connection line 30g without passing through the heat recovery unit 17.

The heat medium valve 17a is disposed in the water supply bypass line 30h. The heat medium valve 17a is a flow rate regulation valve capable of adjusting a flow rate of water flowing through the water supply bypass line 30h. The heat medium valve 17a adjusts the flow rate of water flowing through the water supply bypass line 30h by controlling the opening degree. The opening degree of the heat medium valve 17a in the present embodiment is controlled by the control device 500. Specifically, the heat medium valve 17a receives a signal indicating the opening degree from the control device 500 through wired communication or wireless communication, and adjusts the opening degree based on the received signal.

The heat medium valve 17a can adjust the flow rate of the water flowing through the water supply bypass line 30h by being controlled by the control device 500. The flow rate of the water as the heat medium flowing into the heat recovery unit 17 is adjusted by adjusting the opening degree of the heat medium valve 17a. Therefore, the heat recovery unit 17 functions as an adjustment device that can adjust the temperature of the exhaust gas EG by adjusting the opening degree of the heat medium valve 17a.

### (Deaerator)

The deaerator 33 heats the water from the heat recovery unit 17 and deaerates the dissolved gas (oxygen, carbon dioxide, or the like) contained in the water. The water deaerated by the deaerator 33 is guided to the boiler 12 through the boiler water supply line 30f. The boiler water supply line 30f connects the water supply outlet of the deaerator 33 to the water supply inlet of the boiler 12. The water introduced into the boiler 12 through the boiler water supply line 30f is used as a heat medium for performing heat exchange with the exhaust gas EG in the boiler 12.

The second water supply pump 34b is disposed in the boiler water supply line 30f. Here, the "boiler water supply line 30f" means a middle part of the boiler water supply line 30f, not an inside of the boiler water supply line 30f. The second water supply pump 34b is driven to send the water from the deaerator 33 to the boiler 12. The water introduced into the boiler 12 through the boiler water supply line 30f is heat-exchanged with the exhaust gas EG in the boiler 12 and is heated by the exhaust gas EG to become steam (main steam). This steam is guided to the steam turbine 31 through the main steam line 30a.

The rotation speed of the second water supply pump 34b (the flow rate of water that is pressurized and sent from the deaerator 33 to the boiler 12) in the present embodiment is controlled by the control device 500. Specifically, the second water supply pump 34b receives a signal indicating the rotation speed from the control device 500 through wired communication or wireless communication. The second water supply pump 34b is rotated based on the rotation speed indicated by the signal, and sends the water in the boiler water supply line 30f to the boiler 12 under pressure.

The second water supply pump 34b can adjust the flow rate of the water flowing through the boiler water supply line 30f by being controlled by the control device 500. The flow rate of the water as the heat medium flowing into the boiler 12 is adjusted by adjusting the rotation speed of the second water supply pump 34b.

The flow rate of the water as the heat medium flowing into the boiler 12 may be controlled by, for example, a boiler feed water valve (not shown) disposed in the boiler water supply line 30f. The configuration of the boiler feed water valve will be described in detail in other embodiments described below.

In addition, the deaerator 33 is supplied with the steam (extraction steam) drawn from the steam turbine 31 as a heat source for heating the water. The deaerator 33 and the steam turbine 31 are connected by an extraction steam line 30d. That is, the steam drawn from the steam turbine 31 is introduced into the deaerator 33 through the extraction steam line 30d. The steam introduced into the deaerator 33 is brought into direct contact with the water introduced into the deaerator 33, so that the water is heated and deaerated. Here, the pressure of the steam flowing in the extraction steam line 30d is lower than the pressure of the steam flowing in the main steam line 30a.

The second line 30e connected to the reboiler 133b of the regeneration tower 133 in the carbon dioxide recovery device 13 is connected to the extraction steam line 30d. The steam from the steam turbine 31 flowing through the extraction steam line 30d is introduced into the reboiler 133b through the second line 30e. The steam introduced into the reboiler 133b is used as a heat medium for heating the absorbing liquid in the regeneration tower main body 133a.

The second valve 13b is disposed in the second line 30e. The second valve 13b is a flow rate regulation valve capable of adjusting a flow rate of the steam flowing through the second line 30e. By controlling the opening degree of the second valve 13b, the flow rate of the steam flowing through the second line 30e is adjusted. The opening degree of the second valve 13b in the present embodiment is controlled by the control device 500. Specifically, the second valve 13b receives a signal indicating the opening degree from the control device 500 through wired communication or wireless communication and adjusts the opening degree based on the received signal.

The steam as the heat medium introduced into the reboiler 133b through the second line 30e is the condensed water described above, and is guided into the deaerator 33 through the condensation water line 30k connecting the reboiler 133b and the deaerator 33. The third valve 13c is disposed in the condensation water line 30k. The third valve 13c is a flow rate regulation valve capable of adjusting the flow rate of the condensate water flowing through the condensation water line 30k. The third valve 13c controls the opening degree to adjust the flow rate of the condensate water flowing through the condensation water line 30k. The opening degree of the third valve 13c in the present embodiment is controlled by the control device 500. Specifically, the third valve 13c receives a signal indicating the opening degree from the control device 500 through wired communication or wireless communication and adjusts the opening degree based on the received signal.

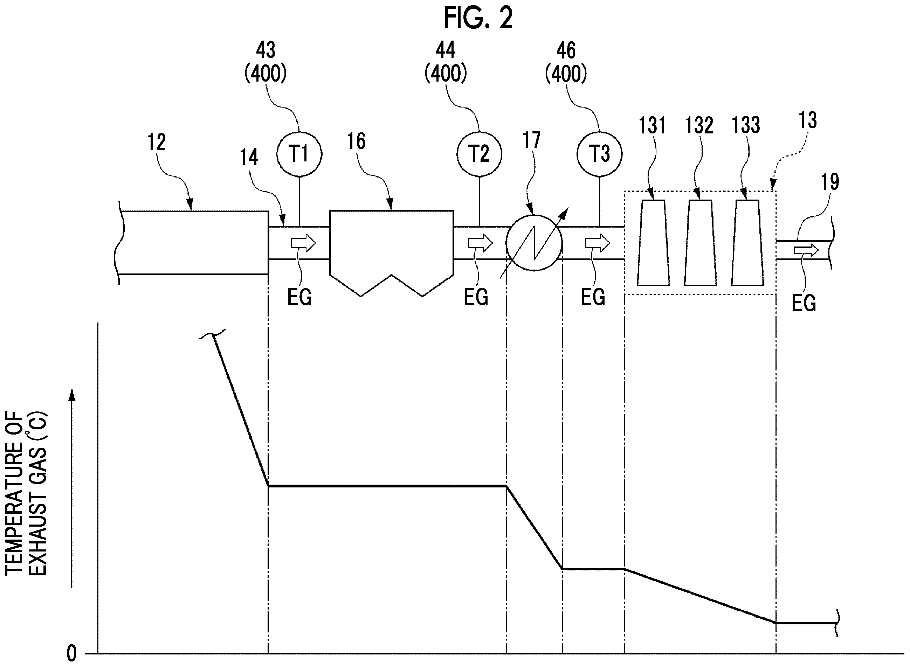

Here, the change in the temperature of the exhaust gas EG flowing through the exhaust gas flow path 14 in the exhaust gas treatment configuration 200 will be described. As shown in Fig. 2, the exhaust gas EG from the incinerator 1 is cooled to a target temperature by being subjected to heat exchange with water in the boiler 12. The "target temperature" in the present specification is not limited to a certain pinpoint temperature, and includes being within a certain temperature range. The target temperature of the exhaust gas EG that has been subjected to heat exchange in the boiler 12 is, for example, 100°C to 200°C. Hereinafter, for convenience of description, this target temperature is referred to as a "first target temperature".

The exhaust gas EG that has flowed out from the boiler 12 passes through the dust collecting device 16 in a state where the temperature is maintained, and then flows into the heat recovery unit 17. The exhaust gas EG that has flowed into the heat recovery unit 17 is cooled to a target temperature by being subjected to heat exchange with water. The target temperature of the exhaust gas EG after heat exchange in the heat recovery unit 17 is, for example, 70°C to 150°C. Hereinafter, for convenience of description, this target temperature is referred to as a "second target temperature".

The exhaust gas EG that has flowed out from the heat recovery unit 17 flows into the carbon dioxide recovery device 13. The exhaust gas EG that has flowed into the carbon dioxide recovery device 13 is cooled in the cooling tower 131. The temperature of the exhaust gas EG after being cooled by the cooling tower 131 is, for example, 20°C to 60°C.

### (Sensor)

As shown in Fig. 1, the sensor 400 is provided in the power generation facility 1000. The sensor 400 in the present embodiment includes a camera 41, an oxygen concentration detection unit 42, a first temperature sensor 43, a second temperature sensor 44, a third temperature sensor 46, and a nitrogen oxide concentration detection unit 45.

### (Camera)

The camera 41 in the present embodiment is an infrared camera capable of imaging the inside of the furnace main body 2, and the camera 41 acquires a heat image in which the waste W and the bright flame F are reflected inside the furnace main body 2. That is, the camera 41 can detect the thermal image information indicating the combustion state of the waste W in the treatment space V. The camera 41 is disposed, for example, at a furnace rear portion inside the furnace main body 2. In the heat images as the detection results generated by imaging the treatment space V by the camera 41, the regions in which the feeder 310, the drying stage 5a, the combustion stage 5b, and the post-combustion stage 5c are captured are specified in advance. The thermal image information detected by the camera 41 has a brightness distribution.

The bright flame F enters an imaging range of the camera 41. The flame F is mainly generated in the combustion stage 5b, and the flame F is reflected in the upper-half portion of the in-furnace image. The bright flame F has a burning-out point at an end portion of the other side Dar. The burnout point is a point (volatile gas generation completion point) on the stoker 4 indicating that the diffusion combustion of the waste W in the combustion stage 5b is finished, and is one of the indicators used for the control for achieving suitable combustion in the incinerator 1. The brightness distribution included in the thermal image information includes the burnout point. The camera 41 images the inside of the furnace main body 2 at a predetermined time interval and transmits a signal indicating the detection result to the control device 500 through wired communication or wireless communication.

### (Oxygen concentration detection unit)

The oxygen concentration detection unit 42 is an oxygen sensor (O₂ sensor) capable of detecting the oxygen concentration O1 of the exhaust gas EG. The oxygen concentration detection unit 42 according to this embodiment is disposed in the outlet flow path 19. Therefore, the oxygen concentration detection unit 42 detects the oxygen concentration O1 of the exhaust gas EG flowing in the outlet flow path 19. The oxygen concentration detection unit 42 detects the oxygen concentration O1 of the exhaust gas EG at a predetermined time interval, and transmits a signal indicating the detection result to the control device 500 through wired communication or wireless communication.

### (First temperature sensor)

The first temperature sensor 43 is disposed between the boiler 12 and the dust collecting device 16 in the exhaust gas flow path 14. The first temperature sensor 43 according to this embodiment detects the temperature of the exhaust gas EG flowing into the dust collecting device 16. The first temperature sensor 43 detects the temperature of the exhaust gas EG at a predetermined time interval and transmits a signal indicating the detection result to the control device 500 through wired communication or wireless communication. Hereinafter, for convenience of description, the temperature of the exhaust gas EG detected by the first temperature sensor 43 is referred to as a "first temperature T1".

### (Second temperature sensor)

The second temperature sensor 44 is disposed between the dust collecting device 16 and the heat recovery unit 17 in the exhaust gas flow path 14. The second temperature sensor 44 according to this embodiment detects the temperature of the exhaust gas EG flowing in from the dust collecting device 16. As can be paraphrased, the second temperature sensor 44 detects the temperature of the exhaust gas EG flowing into the heat recovery unit 17. The second temperature sensor 44 detects the temperature of the exhaust gas EG at a predetermined time interval and transmits a signal indicating the detection result to the control device 500 through wired communication or wireless communication. Hereinafter, for convenience of description, the temperature of the exhaust gas EG detected by the second temperature sensor 44 is referred to as a "second temperature T2".

### (Third temperature sensor)

The third temperature sensor 46 is disposed between the heat recovery unit 17 and the carbon dioxide recovery device 13 in the exhaust gas flow path 14. The third temperature sensor 46 according to this embodiment detects the temperature of the exhaust gas EG that has flowed out from the heat recovery unit 17. In other words, the third temperature sensor 46 detects the temperature of the exhaust gas EG that flows into the carbon dioxide recovery device 13. The third temperature sensor 46 detects the temperature of the exhaust gas EG at a predetermined time interval and transmits a signal indicating the detection result to the control device 500 through wired communication or wireless communication. For convenience of description, the temperature of the exhaust gas EG detected by the third temperature sensor 46 is referred to as a "third temperature T3".

### (Nitrogen oxide concentration detection unit)

The nitrogen oxide concentration detection unit 45 is a nitrogen oxide sensor (NOₓ sensor) capable of detecting the nitrogen oxide concentration A1 of the exhaust gas EG. The nitrogen oxide concentration detection unit 45 according to this embodiment is disposed between the dust collecting device 16 and the heat recovery unit 17 in the exhaust gas flow path 14. Therefore, the nitrogen oxide concentration detection unit 45 detects the nitrogen oxide concentration A1 of the exhaust gas EG that has flowed out from the dust collecting device 16. In other words, the nitrogen oxide concentration detection unit 45 detects the nitrogen oxide concentration A1 of the exhaust gas EG flowing into the heat recovery unit 17. The nitrogen oxide concentration detection unit 45 detects the nitrogen oxide concentration A1 of the exhaust gas EG at a predetermined time interval, and transmits a signal indicating the detection result to the control device 500 through wired communication or wireless communication.

### (Control device)

The control device 500 receives the signal indicating the detection result from the sensor 400 and controls one or more devices that function as the adjustment device. That is, the control device 500 controls one or more of various devices that function as the adjustment device based on the detection result of the sensor 400. In addition, the control device 500 controls the states of the first valve 13a and the second valve 13b in the power generation system 300 based on the operation states of the power generation facility 1000 obtained by receiving the signals indicating the states of the various devices. The operation state of the power generation facility 1000 will be described later.

Each of the various devices referred to here is the feeder 310, the first forced draft fan 81, the air preheater 10, the primary air damper 90, the heat medium valve 17a, and the second water supply pump 34b in the waste treatment system 100 and the power generation system 300.

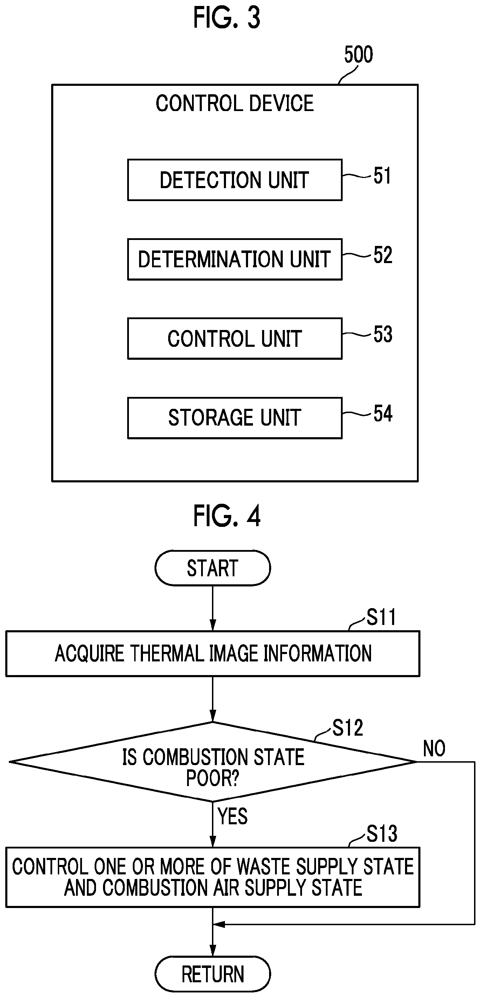

As illustrated in Fig. 3, the control device 500 in the present embodiment includes a detection unit 51, a determination unit 52, a control unit 53, and a storage unit 54. The storage unit 54 stores information used in the determination processing by the determination unit 52.

### (Detection unit)

The detection unit 51 receives the signal from the sensor 400 to acquire the detection result of the sensor 400. In addition, the detection unit 51 acquires the states of the feeder 310, the first forced draft fan 81, the air preheater 10, and the primary air damper 90 as the adjustment devices.

### "Acquisition from camera"

The detection unit 51 acquires the thermal image information indicated by the signal transmitted from the camera 41 by receiving the signal. The detection unit 51 transmits the acquired thermal image information to the determination unit 52.

### "Acquisition from oxygen concentration detection unit"

The detection unit 51 acquires the oxygen concentration O1 indicated by the signal transmitted from the oxygen concentration detection unit 42 by receiving the signal. The detection unit 51 transmits the acquired oxygen concentration O1 to the determination unit 52.

### "Acquisition from first temperature sensor"

The detection unit 51 receives the signal transmitted from the first temperature sensor 43 to acquire the first temperature T1 indicated by the signal. The detection unit 51 transmits the acquired first temperature T1 to the determination unit 52.

### "Acquisition from second temperature sensor"

The detection unit 51 receives the signal transmitted from the second temperature sensor 44 to acquire the second temperature T2 indicated by the signal. The detection unit 51 transmits the acquired second temperature T2 to the determination unit 52.

### "Acquisition from third temperature sensor"

The detection unit 51 acquires the third temperature T3 indicated by the signal transmitted from the third temperature sensor 46 by receiving the signal. The detection unit 51 transmits the acquired third temperature T3 to the determination unit 52.

### "Acquisition from nitrogen oxide concentration detection unit"

The detection unit 51 acquires the nitrogen oxide concentration A1 indicated by the signal transmitted from the nitrogen oxide concentration detection unit 45 by receiving the signal. The detection unit 51 transmits the acquired nitrogen oxide concentration A1 to the determination unit 52.

### "Acquisition from feeder"

The detection unit 51 receives the signal transmitted from the feeder 310 to acquire the state information of the feeder 310 indicated by the signal. Specifically, the detection unit 51 acquires the amount of movement of the feeder 310. The detection unit 51 transmits the acquired amount of movement of the feeder 310 to the determination unit 52.

### "Acquisition from first forced draft fan"

The detection unit 51 receives the signal transmitted from the first forced draft fan 81 to acquire the state information of the first forced draft fan 81 indicated by the signal. Specifically, the detection unit 51 acquires the output rotation speed of the first forced draft fan 81. The detection unit 51 transmits the acquired output rotation speed of the first forced draft fan 81 to the determination unit 52.

### "Acquisition from air preheater"

The detection unit 51 receives the signal transmitted from the air preheater 10 to acquire the state information of the air preheater 10 indicated by the signal. Specifically, the detection unit 51 acquires the set temperature of the air preheater 10. The detection unit 51 transmits the acquired set temperature of the air preheater 10 to the determination unit 52.

### "Acquisition from primary air damper"

The detection unit 51 receives the signal transmitted from the primary air damper 90 to acquire the state information of the primary air damper 90 indicated by the signal. Specifically, the detection unit 51 acquires the opening degree of the primary air damper 90. The detection unit 51 sends the acquired opening degree of the primary air dampers 90 to the determination unit 52.

### (Determination Unit)

The determination unit 52 performs determination processing based on the detection result of the sensor 400 received from the detection unit 51. In addition, the determination unit 52 determines the operation state of the power generation facility 1000 based on the state of the adjustment device received from the detection unit 51.

### "Determination regarding thermal image information"

In a case where the detection unit 51 receives the thermal image information, the determination unit 52 compares the brightness distribution included in the thermal image information with a predetermined brightness distribution.

The determination unit 52 determines that "the combustion state is poor" in a case where the distance between the position of the flameout point included in the brightness distribution of the thermal image information and the position of the flameout point included in the predetermined brightness distribution is greater than the predetermined threshold value.

On the other hand, in a case where the distance between the position of the flameout point included in the brightness distribution of the thermal image information and the position of the flameout point included in the predetermined brightness distribution falls within a range of the predetermined threshold value, the determination unit 52 determines that "the combustion state is not poor". In addition, predetermined brightness distribution and predetermined threshold values are stored in advance, for example, by the storage unit 54.

### "Determination regarding oxygen concentration"

In a case where the oxygen concentration O1 is received from the detection unit 51, the determination unit 52 acquires the air ratio (combustion air ratio) corresponding to the oxygen concentration O1 with reference to predetermined air ratio information. Here, the air ratio information is, for example, a table in which the oxygen concentration O1 of the exhaust gas EG and the air ratio are associated with each other.

In a case where the acquired air ratio is out of a predetermined threshold value range, the determination unit 52 determines that "the air ratio is out of the threshold value range". Further, in a case where the acquired air ratio is smaller than the lower limit value of the threshold value range, the determination unit 52 determines that "the air ratio is low". In addition, in a case where the acquired air ratio is larger than the upper limit value of the threshold value range, the determination unit 52 determines that "the air ratio is high". In the predetermined threshold value range according to the present embodiment, for example, a numerical range of 1.1 or more and 1.25 or less is employed. This threshold value range is a numerical range obtained by the knowledge of the inventors.

On the other hand, in a case where the acquired air ratio is within a predetermined threshold value range, the determination unit 52 determines that "the air ratio is within the threshold value range". Here, the threshold value range includes the upper limit value and the lower limit value of the threshold value range. The air ratio information and the threshold value range are stored in advance, for example, by the storage unit 54.

### "Determination regarding first temperature, second temperature, and nitrogen oxide concentration"

In a case where the determination unit 52 receives the first temperature T1, the second temperature T2, and the nitrogen oxide concentration A1 from the detection unit 51, the determination unit 52 compares the first temperature T1 and the second temperature T2 with a threshold value temperature Tx corresponding to the nitrogen oxide concentration A1 with reference to predetermined correspondence relationship information. The correspondence relationship information in the present embodiment is, for example, a table in which the nitrogen oxide concentration A1 and the threshold value temperature Tx are associated with each other. The threshold value temperature Tx included in the correspondence relationship information is a value within the temperature range indicated by the first objective temperature.

The determination unit 52 determines that "the adjustment of the first temperature T1 is necessary" in a case where the first temperature T1 deviates from the threshold value temperature Tx. The case where the first temperature T1 deviates from the threshold value temperature Tx as described herein means a case where the first temperature T1 is greater than a value obtained by adding, for example, 10% of the threshold value temperature Tx to the threshold value temperature Tx, or a case where the first temperature T1 is smaller than a value obtained by subtracting, for example, 10% of the threshold value temperature Tx from the threshold value temperature Tx. In addition, a case where the first temperature T1 is not deviated from the threshold value temperature Tx means a case where the first temperature T1 is, for example, equal to or lower than a value obtained by adding 10% of the threshold value temperature Tx to the threshold value temperature Tx and is equal to or higher than a value obtained by subtracting 10% of the threshold value temperature Tx from the threshold value temperature Tx.

Further, the determination unit 52 determines that "the first temperature T1 is high" in a case where the first temperature T1 is greater than a value obtained by adding 10% of the threshold value temperature Tx of the threshold value temperature Tx. In addition, the determination unit 52 determines that "the first temperature T1 is low" in a case where the first temperature T1 is smaller than a value obtained by subtracting 10% of the threshold value temperature Tx from the value temperature Tx.

The determination unit 52 determines that "the adjustment of the second temperature T2 is necessary" in a case where the second temperature T2 deviates from the threshold value temperature Tx. The case where the second temperature T2 deviates from the threshold value temperature Tx as described herein means a case where the second temperature T2 is greater than a value obtained by adding, for example, 10% of the threshold value temperature Tx to the threshold value temperature Tx, or a case where the second temperature T2 is smaller than a value obtained by subtracting, for example, 10% of the threshold value temperature Tx from the threshold value temperature Tx. In addition, a case where the second temperature T2 is not deviated from the threshold value temperature Tx means a case where the second temperature T2 is, for example, equal to or lower than a value obtained by adding 10% of the threshold value temperature Tx to the threshold value temperature Tx and is equal to or higher than a value obtained by subtracting 10% of the threshold value temperature Tx from the threshold value temperature Tx.

Further, the determination unit 52 determines that "the second temperature T2 is high" in a case where the second temperature T2 is greater than a value obtained by adding 10% of the threshold value temperature Tx of the threshold value temperature Tx. In addition, the determination unit 52 determines that "the second temperature T2 is low" in a case where the second temperature T2 is smaller than a value obtained by subtracting 10% of the threshold value temperature Tx from the value temperature Tx.

On the other hand, the determination unit 52 determines that "the adjustment of the first temperature T1 is not necessary" in a case where the first temperature T1 does not deviate from the threshold value temperature Tx. In a case where the second temperature T2 does not deviate from the threshold value temperature Tx, the determination unit 52 determines that "the adjustment of the second temperature T2 is not necessary". It should be noted that the correspondence relationship information is stored in advance, for example, by the storage unit 54.

### "Determination regarding third temperature"

In a case where the third temperature T3 is received from the detection unit 51, the determination unit 52 compares the third temperature T3 with a predetermined threshold value temperature Ty. The threshold value temperature Ty is a value within the temperature range indicated by the second objective temperature.

The determination unit 52 determines that "the adjustment of the third temperature T3 is necessary" in a case where the third temperature T3 deviates from the threshold value temperature Ty. Here, the case where the third temperature T3 deviates from the threshold value temperature Ty means a case where the third temperature T3 is, for example, larger than a value obtained by adding 10% of the threshold value temperature Ty to the threshold value temperature Ty, or is smaller than a value obtained by subtracting 10% of the threshold value temperature Ty from the threshold value temperature Ty. In addition, a case where the third temperature T3 is not deviated from the threshold value temperature Ty means a case where the third temperature T3 is, for example, equal to or lower than a value obtained by adding 10% of the threshold value temperature Ty to the threshold value temperature Ty and is equal to or higher than a value obtained by subtracting 10% of the threshold value temperature Ty from the threshold value temperature Ty.

Further, the determination unit 52 determines that "the third temperature T3 is high" in a case where the third temperature T3 is greater than a value obtained by adding 10% of the threshold value temperature Ty of the threshold value temperature Ty. In addition, the determination unit 52 determines that "the third temperature T3 is low" in a case where the third temperature T3 is smaller than a value obtained by subtracting 10% of the threshold value temperature Ty from the value temperature Ty.

On the other hand, the determination unit 52 determines that "the adjustment of the third temperature T3 is not necessary" in a case where the third temperature T3 does not deviate from the threshold value temperature Ty. The threshold value temperature Ty is stored in advance, for example, by the storage unit 54.

### "Determination regarding operation state of power generation facility"

The determination unit 52 determines the operation state of the power generation facility 1000 based on the acquired state information in a case where one or more pieces of the state information of each of the feeder 310, the first forced draft fan 81, the air preheater 10, and the primary air damper 90 are acquired from the detection unit 51.

In a case where one or more of the following determination results (i) to (iv) are generated, the determination unit 52 acquires the incineration amount ratio with reference to predetermined incineration amount information in which each state of the following (i) to (iv) is associated with the ratio (hereinafter, referred to as an incineration amount ratio) of the maximum incineration possible amount of the waste W in the treatment space V. The incineration amount information is, for example, a table.
(i) The amount of movement of the feeder 310 in the forward and backward directions is larger than a predetermined forward and backward movement amount threshold value.
(ii) The rotation speed of the first forced draft fan 81 is higher than a predetermined rotation speed threshold value.
(iii) The set temperature of the air preheater 10 is higher than a predetermined set temperature threshold value.
(iv) The opening degree of the primary air damper 90 is more than the predetermined opening degree threshold value.

For example, in a case where the incineration amount ratio is 90% or more (at the time of the full load), the determination unit 52 determines that "all furnaces are operated". On the other hand, for example, in a case where the incineration amount ratio is less than 90% (at the time of the partial load), the determination unit 52 determines that "a part of furnace is operated". The incineration amount information, the forward/backward amount threshold value, the rotation speed threshold value, the set temperature threshold value, and the opening degree threshold value are stored in advance by, for example, the storage unit 54.

### (Control unit)

The control unit 53 controls various devices that function as the adjustment device based on the determination result by the determination unit 52. In addition, the control unit 53 controls the states of the first valve 13a and the second valve 13b based on the operation state of the power generation facility 1000 determined by the determination unit 52.

### "Control for feeder, first forced draft fan, air preheater, and primary air damper"

In a case where the determination unit 52 determines that "the combustion state is poor", the control unit 53 controls one or more of the feeder 310, the first forced draft fan 81, the air preheater 10, and the primary air damper 90 to control one or more of the supply state of the waste W and the supply state of the combustion air.

Specifically, the control unit 53 executes, for example, one or more of the following controls (I) to (IV).
(I) A signal indicating an increase or decrease in the amount of movement was transmitted to the feeder 310.
(II) A signal indicating an increase or decrease in the rotation speed is transmitted to the first forced draft fan 81.
(III) A signal indicating an increase or decrease in the set temperature is transmitted to the air preheater 10.
(IV) A signal indicating an increase or a decrease in the opening degree is transmitted to the primary air damper 90.

That is, the control (I) corresponds to the control of the supply state of the waste W, and the controls (II) to (IV) correspond to the control of the supply state of the combustion air.

By the control, the combustion state in the treatment space V inside the furnace main body 2 is stabilized. As a result, the flow rate of the exhaust gas EG discharged from the incinerator 1 is adjusted to the target flow rate, and the temperature of the exhaust gas EG is adjusted to the target temperature. The "target flow rate" in the present specification is not limited to a certain pinpoint flow rate, and includes a flow rate that falls within a certain flow rate range.

Therefore, by controlling the feeder 310, the first forced draft fan 81, the air preheater 10, and the primary air damper 90 as the adjustment device by the control device 500, one or more of the supply state of the waste W and the supply state of the combustion air are controlled. As a result, the flow rate of the exhaust gas EG generated by the combustion of the waste W is adjusted to the target flow rate, and the temperature of the exhaust gas EG is adjusted to the target temperature.

### "Control for first forced draft fan and primary air damper"

The control unit 53 controls the amount of combustion air by controlling one or more of the first forced draft fans 81 and the primary air dampers 90 in a case where the determination unit 52 determines that "the air ratio is out of the threshold value range".

Specifically, in a case where the determination unit 52 determines that the "air ratio is low", the control unit 53 performs one or more of the control of transmitting the signal indicating the increase in the amount of movement to the feeder 310 and the control of transmitting the signal indicating the increase in the opening degree to the primary air damper 90. In addition, in a case where the determination unit 52 determines that the "air ratio is high", the control unit 53 performs one or more of the control of transmitting a signal indicating a decrease in the amount of advance and retreat to the feeder 310 and the control of transmitting a signal indicating a decrease in the opening degree to the primary air damper 90.

On the other hand, in a case where the determination unit 52 determines that the "air ratio is within the threshold value range", the control unit 53 transmits a signal indicating the maintenance of the opening degree to the first forced draft fan 81 and the primary air damper 90.

### "Control for secondary water supply pump"

The control unit 53 controls the amount of the heat medium to the boiler 12 in a case where the determination unit 52 determines that "the first temperature T1 needs to be adjusted" or "the second temperature T2 needs to be adjusted".

Specifically, in a case where the determination unit 52 determines that "the first temperature T1 is high" or "the second temperature T2 is high", the control unit 53 transmits a signal indicating an increase in rotation speed to the second water supply pump 34b. In addition, in a case where the determination unit 52 determines that "the first temperature T1 is low" or in a case where the determination unit 52 determines that "the second temperature T2 is low", the control unit 53 transmits a signal indicating a decrease in the rotation speed to the second water supply pump 34b. That is, the amount of the heat medium introduced into the boiler 12 is controlled.

On the other hand, in a case where the determination unit 52 determines that "the adjustment of the first temperature T1 is not necessary" and determines that "the adjustment of the second temperature T2 is not necessary", the control unit 53 transmits a signal indicating the maintenance of the rotation speed to the second water supply pump 34b.

### "Control of heat medium valve"

The control unit 53 controls the amount of the heat medium supplied into the heat recovery unit 17 in a case where the determination unit 52 determines that "the adjustment of the third temperature T3 is necessary".

Specifically, in a case where the determination unit 52 determines that "the third temperature T3 is high", the control unit 53 transmits a signal indicating an increase in the opening degree to the heat medium valve 17a. In addition, in a case where the determination unit 52 determines that "the third temperature T3 is low", the control unit 53 transmits a signal indicating a decrease in the opening degree to the heat medium valve 17a. That is, the amount of the heat medium introduced into the heat recovery unit 17 is controlled.

On the other hand, in a case where the determination unit 52 determines that "the adjustment of the third temperature T3 is not necessary", the control unit 53 transmits a signal indicating the maintenance of the opening degree to the heat medium valve 17a.

### "Control of First Valve and Second Valve"

In a case where the determination unit 52 determines that "all furnace operation" is performed, the control unit 53 transmits a signal indicating an instruction for the fully closed state (minimum opening degree) to the first valve 13a and transmits a signal indicating an instruction for the fully opened state (maximum opening degree) to the second valve 13b.

On the other hand, in a case where the determination unit 52 determines that the state is "a part of furnace is operated", the control unit 53 transmits a signal indicating an instruction for the fully opened state (the maximum opening degree) to the first valve 13a and transmits a signal indicating an instruction for the fully closed state (the minimum opening degree) to the second valve 13b.

### (Operation of control device)

Subsequently, an operation of the control device 500 will be described.

Hereinafter, an example of an operation of the control device 500 that controls the adjustment device based on the thermal image information will be described with reference to Fig. 4.

The detection unit 51 acquires the thermal image information (step S11). Next, the determination unit 52 determines whether or not the combustion state is poor based on the acquired thermal image information (step S12). In a case where the determination unit 52 determines that the combustion state is not good (step S12: YES), the control unit 53 controls one or more of the supply state of the waste and the supply state of the combustion air (step S13). In a case where the processing of step S13 is finished, the processing of step S11 is performed again. In a case where the determination unit 52 determines that the combustion state is not poor (step S12: NO), the processing of step S11 is performed again.

The processes of step S11 to step S13 described above are repeatedly executed in the operation stage of the power generation facility 1000.

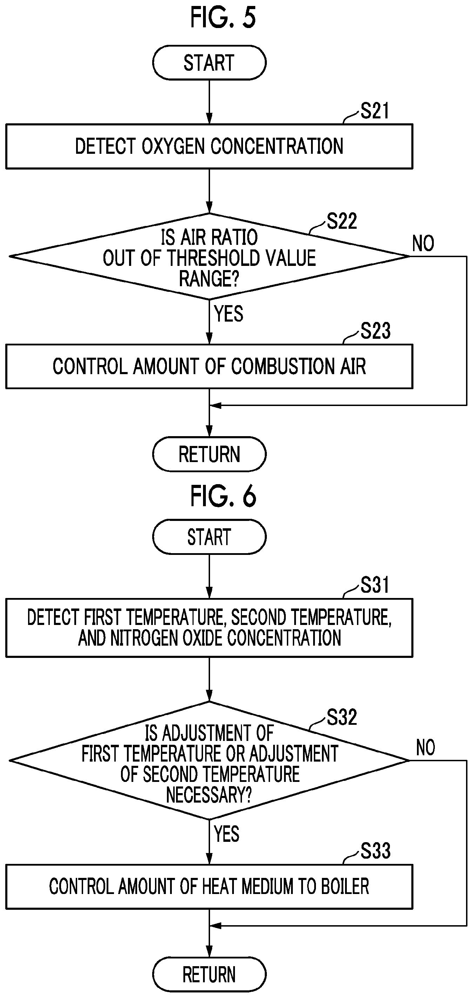

Hereinafter, an example of an operation of the control device 500 that controls the adjustment device based on the oxygen concentration O1 will be described with reference to Fig. 5.

The detection unit 51 acquires the oxygen concentration O1 (step S21). Next, the determination unit 52 determines whether the air ratio is out of the threshold value range or is within the threshold value range based on the acquired oxygen concentration O1 (step S22). In a case where the determination unit 52 determines that the air ratio is outside the threshold value range (step S22: YES), the control unit 53 controls the amount of combustion air (step S23). In a case where the processing of step S23 is finished, the processing of step S21 is performed again. In a case where the determination unit 52 determines that the air ratio is within the threshold value range (step S22: NO), the process in step S21 is performed again.

The processes of step S21 to step S23 described above are repeatedly executed in the operation stage of the power generation facility 1000.

Hereinafter, with reference to Fig. 6, an example of the operation of the control device 500 that controls the adjustment device based on the first temperature T1, the second temperature T2, and the nitrogen oxide concentration A1 will be described.

The detection unit 51 acquires the first temperature T1, the second temperature T2, and the nitrogen oxide concentration A1 (step S31). Next, the determination unit 52 determines whether or not the adjustment of the first temperature T1 is necessary or whether or not the adjustment of the second temperature T2 is necessary, based on the acquired first temperature T1, second temperature T2, and nitrogen oxide concentration A1 (step S32). In a case where the determination unit 52 determines that the adjustment of the first temperature T1 is necessary or the adjustment of the second temperature T2 is necessary (step S32: YES), the control unit 53 controls the amount of the heat medium to the boiler 12 (step S33). In a case where the processing of step S33 is finished, the processing of step S31 is performed again. In a case where the determination unit 52 determines that the adjustment of the first temperature T1 is not necessary and the adjustment of the second temperature T2 is not necessary (step S32: NO), the processing in step S31 is performed again.

The processes of step S31 to step S33 described above are repeatedly executed in the operation stage of the power generation facility 1000.

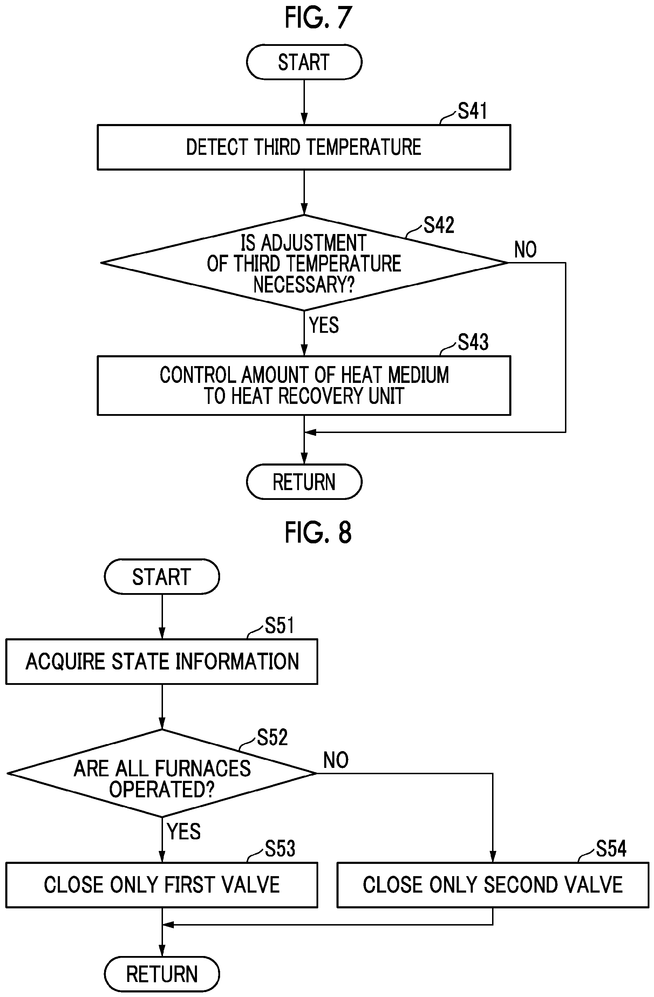

Hereinafter, with reference to Fig. 7, an example of the operation of the control device 500 that controls the adjustment device based on the third temperature T3 will be described.

The detection unit 51 acquires the third temperature T3 (step S41). Next, the determination unit 52 determines whether or not the adjustment of the third temperature T3 is necessary, based on the acquired third temperature T3 (step S42). In a case where the determination unit 52 determines that the adjustment of the third temperature T3 is necessary (step S42: YES), the control unit 53 controls the amount of the heat medium supplied into the heat recovery unit 17 (step S43). In a case where the processing of step S43 is finished, the processing of step S41 is performed again. In a case where the determination unit 52 determines that the adjustment of the third temperature T3 is not necessary (step S42: NO), the processing of step S41 is performed again.

The processes of step S41 to step S43 described above are repeatedly executed in the operation stage of the power generation facility 1000.

Hereinafter, with reference to Fig. 8, an example of the operation of the control device 500 that controls the first valve 13a and the second valve 13b based on the state information will be described.

The detection unit 51 acquires the state information (step S51). Next, the determination unit 52 determines whether the operation is the all furnace operation or the part of furnace operation based on the acquired state information (step S52). In a case where the determination unit 52 determines that the operation is the all furnace operation (step S52: YES), the control unit 53 controls the first valve 13a to be in the fully closed state and controls the second valve 13b to be in the fully opened state (step S53). In a case where the processing of step S53 is finished, the processing of step S51 is performed again. In a case where the determination unit 52 determines that the operation is the part of furnace operation (step S52: NO), the control unit 53 controls the first valve 13a to be in the fully opened state and controls the second valve 13b to be in the fully closed state (step S54). In a case where the processing of step S54 is finished, the processing of step S51 is performed again.

The processes of step S51 to step S54 described above are repeatedly executed in the operation stage of the power generation facility 1000.

The exhaust gas treatment system is configured with the above-described exhaust gas flow path 14, the carbon dioxide recovery device 13, the adjustment device, and the control device 500, and treats the exhaust gas. The exhaust gas treatment system is provided as a part of the facility in which the exhaust gas EG is generated. That is, in the present embodiment, this exhaust gas treatment system is provided in the power generation facility 1000.

### (Exhaust gas treatment method used in power generation facility)

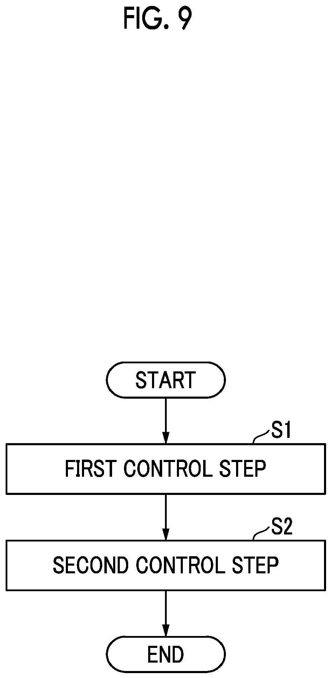

Subsequently, an exhaust gas treatment method used in the power generation facility 1000 will be described with reference to Fig. 9. In this exhaust gas treatment method, the adjustment device is controlled based on the detection result of the sensor 400. The exhaust gas treatment method executes a first control step S1 and a second control step S2.

In the first control step S1, first, the feeder 310 as the adjustment device and the first forced draft fan 81 supply the waste W and the combustion air into the treatment space V inside the furnace main body 2 of the incinerator 1. Next, the camera 41 acquires the thermal image information indicating the combustion state of the waste W in the incinerator 1. Next, the control device 500 controls the adjustment device based on the thermal image information acquired by the camera 41 to control one or more of the supply state of the waste W supplied into the incinerator 1 and the supply state of the combustion air supplied into the incinerator 1. In this case, the control device 500 controls one or more of the feeder 310, the first forced draft fan 81, the air preheater 10, and the primary air damper 90 as the adjustment device. In a case where the first control step S1 is finished, the second control step S2 is executed.

In the second control step S2, first, the oxygen concentration detection unit 42 acquires the oxygen concentration O1. Next, the control device 500 controls the adjustment device based on the detection result of the oxygen concentration detection unit 42 to control the amount of combustion air supplied into the incinerator 1 such that the air ratio obtained from the oxygen concentration O1 is 1.1 or more and 1.25 or less. In this case, the control device 500 controls one or more of the first forced draft fan 81 and the primary air damper 90 as the adjustment device. The exhaust gas treatment method according to the present embodiment ends.

### (Operations and effects)

In the above configuration, the detection result of the sensor 400 is used to set the flow rate and the temperature of the exhaust gas EG flowing through the exhaust gas flow path 14 to the target flow rate and the target temperature by the adjustment device. The adjustment device is the feeder 310, the first forced draft fan 81, the air preheater 10, and the primary air damper 90 in the waste treatment system 100, and the boiler 12 and the heat recovery unit 17 in the exhaust gas treatment configuration 200. That is, the state of the exhaust gas EG flowing through the exhaust gas flow path 14 can be stabilized as compared with a case in which the flow rate and the temperature of the exhaust gas EG are not adjusted to the target flow rate and the target temperature. Therefore, for example, an external device or the like that uses the exhaust gas EG flowing through the exhaust gas flow path 14 can smoothly use the heat of the exhaust gas EG. As a result, it is possible to reduce an opportunity of using the power in the power generation facility 1000. In addition, since the state of the exhaust gas EG is stabilized, carbon dioxide can be stably recovered from the exhaust gas EG in the carbon dioxide recovery device 13. Therefore, it is possible to more efficiently operate while stably recovering carbon dioxide in the exhaust gas EG.

In addition, in the field of the power generation facility 1000 that performs waste power generation, in a case where the properties of the waste W or the supply amount of the waste W to the inside of the furnace main body 2 is changed, the air ratio is generally maintained to be 1.3 or more and the incineration is performed, in order to fully incinerate the supplied waste W.

In the above configuration, the control device 500 controls the amount of the combustion air based on the air ratio obtained from the oxygen concentration O1 detected by the oxygen concentration detection unit 42. Specifically, the control unit 53 of the control device 500 controls the states of the first forced draft fan 81 and the primary air damper 90 as the adjustment device such that the air ratio is 1.1 or more and 1.25 or less. As a result, for example, the nitrogen oxide concentration A1 of the nitrogen oxides contained in the exhaust gas EG can be suppressed as compared with a case in which the air ratio is maintained to be 1.3 or more.

In addition, in the above configuration, the amount of the heat medium supplied into the boiler 12 is controlled based on the nitrogen oxide concentration A1 in the exhaust gas EG detected by the nitrogen oxide concentration detection unit 45 and the temperature of the exhaust gas EG detected by one or more of the first temperature sensor 43 and the second temperature sensor 44. That is, the temperature of the exhaust gas EG passing through the dust collecting device 16 can be adjusted to the temperature based on the nitrogen oxide concentration A1. As a result, the denitration performance of the exhaust gas EG in the dust collecting device 16 can be further stabilized.

In addition, in the above configuration, the amount of the heat medium supplied into the heat recovery unit 17 is controlled based on the temperature of the exhaust gas EG detected by the third temperature sensor 46. That is, the amount of the heat medium that performs heat exchange with the exhaust gas EG in the heat recovery unit 17 is controlled. Accordingly, it is possible to further stabilize the temperature of the exhaust gas EG from the heat exchanger to the carbon dioxide recovery device 13 in the exhaust gas flow path 14.

In addition, in the above configuration, in a case where the power generation facility 1000 is in the full-load operation, the first valve 13a disposed in the first line 30b that can flow the steam from the boiler 12 is closed, and the second valve 13b in the second line 30e that can flow the steam drawn from the steam turbine 31 is opened. That is, the steam flowing through the first line 30b is not introduced into the reboiler 133b of the regeneration tower 133, and the steam flowing through the second line 30e is introduced into the reboiler 133b. On the other hand, in a case where the power generation facility 1000 is in the part of furnace operation, the first valve 13a is opened and the second valve 13b is closed. That is, the steam flowing in the first line 30b is introduced into the reboiler 133b of the regeneration tower 133, and the steam flowing in the second line 30e is introduced into the reboiler 133b. The pressure of the steam flowing through the second line 30e is lower than the pressure of the steam flowing through the first line 30b. As a result, in a case of the all furnace operation (the power generation facility is operated at almost a full load), the steam flowing in the extraction steam line 30d can be guided to the reboiler 133b. On the other hand, in a case where the steam pressure flowing through the extraction steam line 30d is reduced during the operation of a part of the furnace (the power generation facility is a partial load), the steam pressure may be lower than the required pressure of the reboiler 133b. According to the above configuration, in a case of the part of furnace operation of the furnace, the steam flowing through the main steam line 30a can be guided to the reboiler 133b. Therefore, the steam guided to the reboiler 133b can be switched between the steam supplied into the steam turbine 31 and the steam extracted from the steam turbine 31, in accordance with the operation state of the power generation facility 1000. Therefore, in a case where the load is low, it is possible to switch to the use of the steam (main steam) flowing through the main steam line 30a while using the extraction steam that can basically increase the amount of power generation by the steam turbine 31, and as a result, the carbon dioxide can be recovered regardless of the load.

### [Second embodiment]

Hereinafter, the power generation facility 1000 according to a second embodiment of the present disclosure will be described. The power generation facility 1000 described in the second embodiment has a partially different configuration from the power generation facility 1000 described in the first embodiment. The same components as those in the first embodiment will be designated by the same reference numerals and will not be described in detail. The exhaust gas treatment configuration 200a in the second embodiment further includes an economizer 15. In addition, various lines of the power generation system 300 in the second embodiment further include a third connection line 30i and a fourth connection line 30j.

### (Exhaust gas treatment configuration)

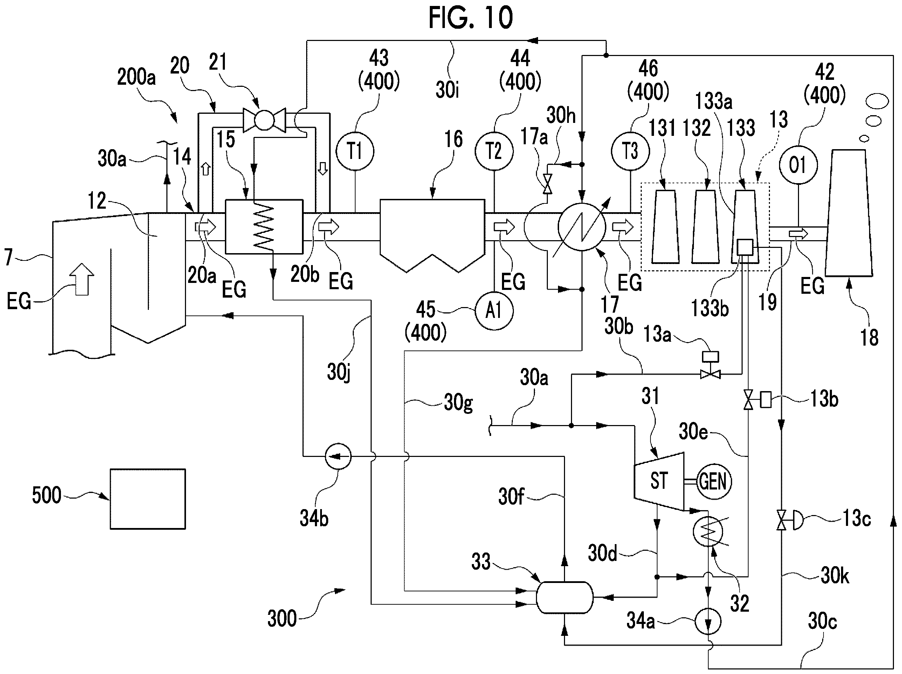

As shown in Fig. 10, the exhaust gas treatment configuration 200a includes the boiler 12, the exhaust gas flow path 14, the economizer 15, the dust collecting device 16, the heat recovery unit 17, the carbon dioxide recovery device 13, the chimney 18, the outlet flow path 19, the bypass line 20, and the flow rate adjuster 21.

### (Economizer)

The economizer 15 is a device (heat exchanger) that performs heat exchange between the exhaust gas EG flowing through the exhaust gas flow path 14 from the boiler 12 and a heat medium introduced from the outside. The economizer 15 is disposed between the boiler 12 and the dust collecting device 16 in the exhaust gas flow path 14. The exhaust gas EG that has flowed into the economizer 15 is cooled to a target temperature by being subjected to heat exchange with the heat medium supplied from the outside. On the other hand, the heat medium introduced into the economizer 15 from the outside is heated by the exhaust gas EG. The heat medium introduced into the economizer 15 in the present embodiment is water (feed water). The exhaust gas EG that has finished heat exchange in the economizer 15 flows out to the exhaust gas flow path 14 again. The first temperature sensor 43 is disposed between the economizer 15 and the dust collecting device 16 in the exhaust gas flow path 14.

Here, the third connection line 30i connects the first connection line 30c and the economizer 15. The water from the condenser 32 is introduced into the economizer 15 as a heat medium for performing heat exchange with the exhaust gas EG through the third connection line 30i. The heat medium that has finished the heat exchange in the economizer 15 is guided to the deaerator 33, for example, through a fourth connection line 30j that connects the economizer 15 and the deaerator 33.

### (Bypass line)

One end 20a of the bypass line 20 is connected to the exhaust gas flow path 14 between the boiler 12 and the economizer 15, and another end 20b is connected to the exhaust gas flow path 14 between the economizer 15 and the dust collecting device 16. Therefore, a part of the exhaust gas EG flowing in the exhaust gas flow path 14, which has flowed out from the boiler 12 can flow into the bypass line 20 from the one end 20a and can flow into the exhaust gas flow path 14 again through the other end 20b. Therefore, the bypass line 20 can bypass the exhaust gas EG from the exhaust gas flow path 14 between the boiler 12 and the economizer 15 to the exhaust gas flow path 14 between the economizer 15 and the dust collecting device 16 without passing through the economizer 15. The other end 20b of the bypass line 20 is disposed closer to the economizer 15 side than the first temperature sensor 43 in the exhaust gas flow path 14.

### (Flow rate adjuster)

The flow rate adjuster 21 is disposed in the bypass line 20. The term "in the bypass line 20" as used herein means "in the middle of the bypass line 20" instead of "inside the bypass line 20". The flow rate adjuster 21 is a flow rate regulation valve capable of adjusting the flow rate of the steam flowing through the bypass line 20 by adjusting the opening degree. The opening degree of the flow rate regulation valve in the present embodiment is controlled by the control device 500a. Specifically, the flow rate regulation valve receives a signal indicating an opening degree from the control device 500a through wired communication or wireless communication. The flow rate regulation valve adjusts the flow rate of the exhaust gas EG flowing through the bypass line 20 based on the opening degree indicated by the signal. Therefore, the flow rate adjuster 21 functions as an adjustment device that can adjust the amount of the exhaust gas EG flowing into the economizer 15 in the exhaust gas flow path 14 by being controlled by the control device 500a.

### (Control device)

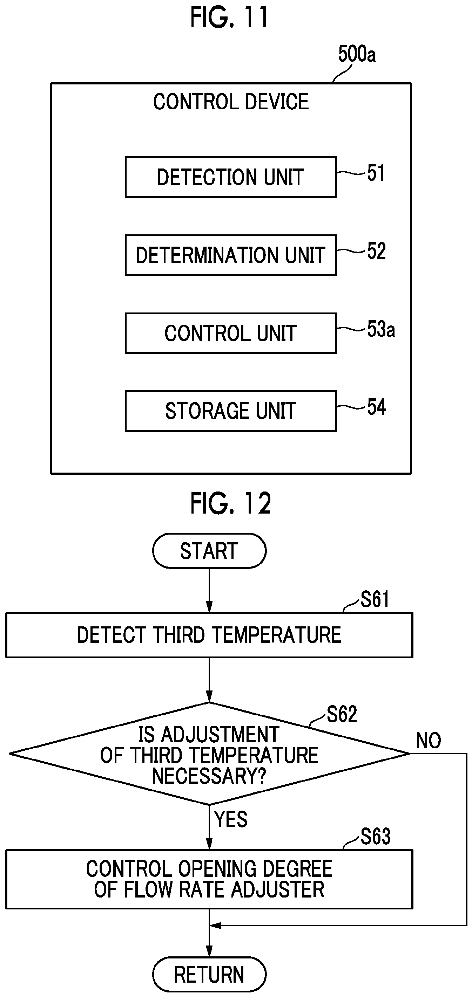

As shown in Fig. 11, a control device 500a according to this embodiment includes a detection unit 51, a determination unit 52, a control unit 53a, and a storage unit 54.

The control unit 53a controls the opening degree of the flow rate adjuster 21 in a case where the determination unit 52 determines that "the adjustment of the third temperature T3 is necessary".

Specifically, in a case where the determination unit 52 determines that "the third temperature T3 is high", the control unit 53a transmits a signal indicating a decrease in the opening degree to the flow rate adjuster 21. In addition, in a case where the determination unit 52 determines that "the third temperature T3 is low", the control unit 53a transmits a signal indicating an increase in the opening degree to the flow rate adjuster 21. That is, the flow rate of the exhaust gas EG flowing into the economizer 15 is controlled at the same time as the flow rate of the exhaust gas EG flowing through the bypass line 20 is adjusted.

On the other hand, in a case where the determination unit 52 determines that "the adjustment of the third temperature T3 is not necessary", the control unit 53a transmits a signal indicating the maintenance of the opening degree to the flow rate adjuster 21.

Hereinafter, an example of the operation of the control device 500a that controls the adjustment device based on the third temperature T3 will be described with reference to Fig. 12.

The detection unit 51 acquires the third temperature T3 (step S61). Next, the determination unit 52 determines whether or not the adjustment of the third temperature T3 is necessary, based on the acquired third temperature T3 (step S62). In a case where the determination unit 52 determines that the adjustment of the third temperature T3 is necessary (step S62: YES), the control unit 53a controls the opening degree of the flow rate adjuster 21 (step S63). In a case where the processing of step S63 is finished, the processing of step S61 is performed again. In a case where the determination unit 52 determines that the adjustment of the third temperature T3 is not necessary (step S62: NO), the processing of step S61 is performed again.

The processes of step S61 to step S63 described above are repeatedly executed in the operation stage of the power generation facility 1000.

### (Operations and effects)

In the above configuration, the amount of the exhaust gas EG flowing into the economizer 15 is controlled based on the temperature of the exhaust gas EG detected by the third temperature sensor 46. That is, the amount of the exhaust gas EG to be heat-exchanged with the heat medium in the economizer 15 is controlled. Accordingly, it is possible to further stabilize the temperature of the exhaust gas EG flowing into the carbon dioxide recovery device 13.

### [Third embodiment]

Hereinafter, a power generation facility 1000 according to a third embodiment of the present disclosure will be described. The power generation facility 1000 described in the third embodiment has a partially different configuration from the power generation facility 1000 described in the second embodiment. The same components as those in the second embodiment are denoted by the same reference numerals, and the detailed description thereof will be omitted.

### (Exhaust gas treatment configuration)

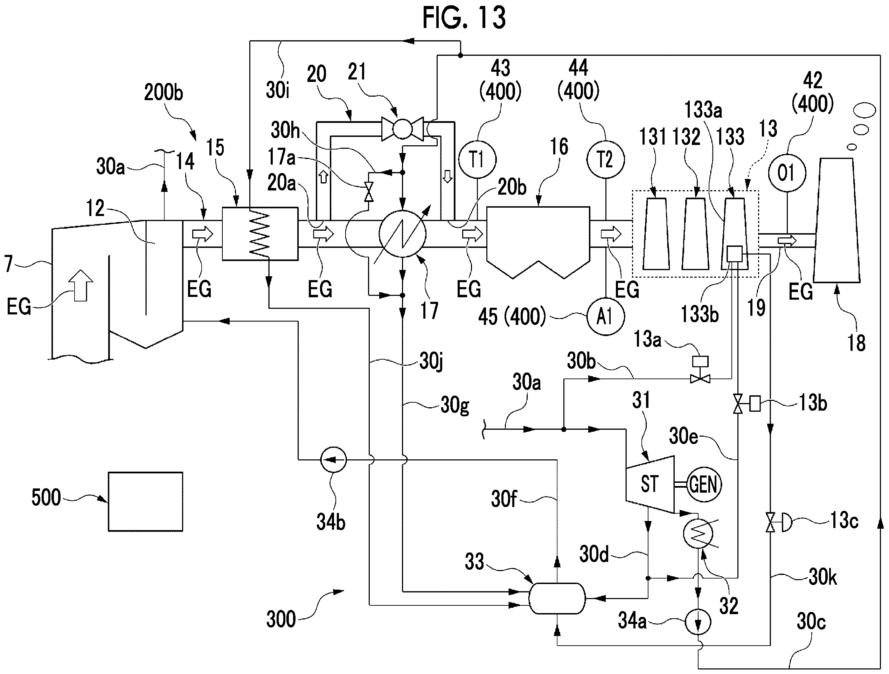

As shown in Fig. 13, the exhaust gas treatment configuration 200b includes the boiler 12, the exhaust gas flow path 14, the economizer 15, the dust collecting device 16, the heat recovery unit 17, the carbon dioxide recovery device 13, the chimney 18, the outlet flow path 19, the bypass line 20, and the flow rate adjuster 21.

### (Heat recovery unit)

The heat recovery unit 17 is disposed between the economizer 15 and the dust collecting device 16 in the exhaust gas flow path 14. Therefore, the exhaust gas EG from the economizer 15 flows into the heat recovery unit 17.

### (Bypass line)

One end 20a of the bypass line 20 is connected to the exhaust gas flow path 14 between the economizer 15 and the heat recovery unit 17, and the other end 20b is connected to the exhaust gas flow path 14 between the heat recovery unit 17 and the dust collecting device 16. Therefore, the bypass line 20 can bypass the exhaust gas EG from the exhaust gas flow path 14 between the economizer 15 and the heat recovery unit 17 to the exhaust gas flow path 14 between the heat recovery unit 17 and the dust collecting device 16 without passing through the heat recovery unit 17. The other end 20b of the bypass line 20 is disposed closer to the heat recovery unit 17 than the first temperature sensor 43 in the exhaust gas flow path 14.

### (Control device)

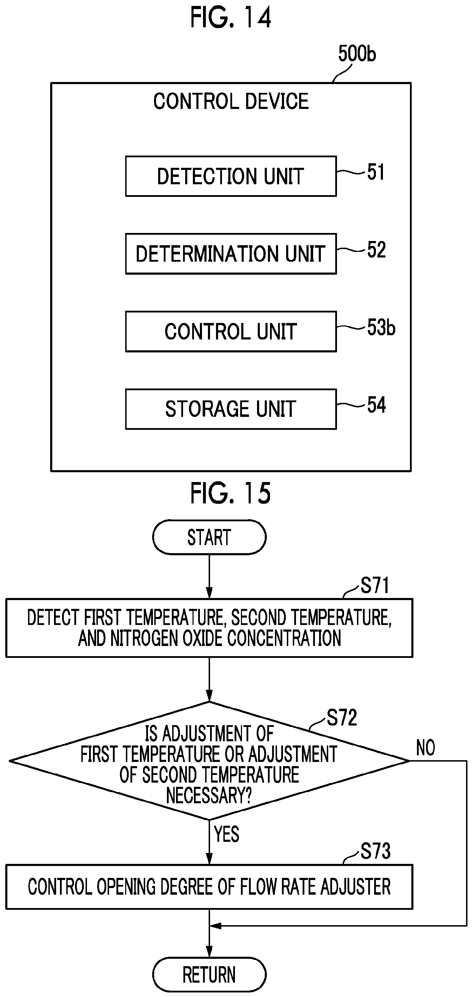

As shown in Fig. 14, a control device 500b according to this embodiment includes a detection unit 51, a determination unit 52, a control unit 53b, and a storage unit 54.

The control unit 53b controls the opening degree of the flow rate adjuster 21 in a case where the determination unit 52 determines that "the adjustment of the first temperature T1 is necessary" or "the adjustment of the second temperature T2 is necessary".

Specifically, in a case where the determination unit 52 determines that "the first temperature T1 is high" or "the second temperature T2 is high", the control unit 53b transmits a signal indicating a decrease in the opening degree to the flow rate adjuster 21. In addition, in a case where the determination unit 52 determines that "the first temperature T1 is low" or in a case where the determination unit 52 determines that "the second temperature T2 is low", the control unit 53b transmits a signal indicating an increase in the opening degree to the flow rate adjuster 21. That is, the flow rate of the exhaust gas EG flowing into the heat recovery unit 17 is controlled at the same time as the flow rate of the exhaust gas EG flowing through the bypass line 20 is adjusted.

On the other hand, in a case where the determination unit 52 determines that "the adjustment of the first temperature T1 is not necessary" and "the adjustment of the second temperature T2 is not necessary", the control unit 53b transmits a signal indicating the maintenance of the opening degree to the flow rate adjuster 21.

Hereinafter, with reference to Fig. 15, an example of the operation of the control device 500b that controls the adjustment device based on the first temperature T1, the second temperature T2, and the nitrogen oxide concentration A1 will be described.

The detection unit 51 acquires the first temperature T1, the second temperature T2, and the nitrogen oxide concentration A1 (step S71). Next, the determination unit 52 determines whether or not the adjustment of the first temperature T1 is needed or whether or not the adjustment of the second temperature T2 is needed, based on the acquired first temperature T1, second temperature T2, and nitrogen oxide concentration A1 (step S72). In a case where the determination unit 52 determines that the adjustment of the first temperature T1 is necessary or the adjustment of the second temperature T2 is necessary (step S72: YES), the control unit 53b controls the opening degree of the flow rate adjuster 21 (step S73). In a case where the processing of step S73 is finished, the processing of step S71 is performed again. In a case where the determination unit 52 determines that the adjustment of the first temperature T1 is not necessary and the adjustment of the second temperature T2 is not necessary (step S72: NO), the processing of step S71 is performed again.

The processes of step S71 to step S73 described above are repeatedly executed in the operation stage of the power generation facility 1000.

### (Operations and effects)

In the above configuration, the amount of the exhaust gas EG flowing into the heat recovery unit 17 is controlled based on the nitrogen oxide concentration A1 in the exhaust gas EG detected by the nitrogen oxide concentration detection unit 45 and the temperature of the exhaust gas EG detected by one or more of the first temperature sensor 43 and the second temperature sensor 44. That is, the amount of the exhaust gas EG to be heat-exchanged with the heat medium in the heat recovery unit 17 is controlled. Accordingly, it is possible to further stabilize the temperature of the exhaust gas EG flowing into the dust collecting device 16.

### [Fourth embodiment]

Hereinafter, a power generation facility 1000 according to a fourth embodiment of the present disclosure will be described. A power generation facility 1000 described in a fourth embodiment has a partially different configuration from the power generation facility 1000 according to the first embodiment. The same components as those in the first embodiment will be designated by the same reference numerals and will not be described in detail. The configuration of the steam turbine 35 of the power generation system 300a in the fourth embodiment is different from that of the steam turbine 31 described in the first embodiment. In addition, the various lines in the power generation system 300a in the fourth embodiment do not include the first line 30b included by the various lines of the power generation system 300 described in the first embodiment, and include the steam introduction line 13d instead of the second line 30e. In addition, the various valves in the power generation system 300a in the fourth embodiment do not include the first valve 13a and the second valve 13b included in the various valves of the power generation system 300 described in the first embodiment.

### (Power generation system)

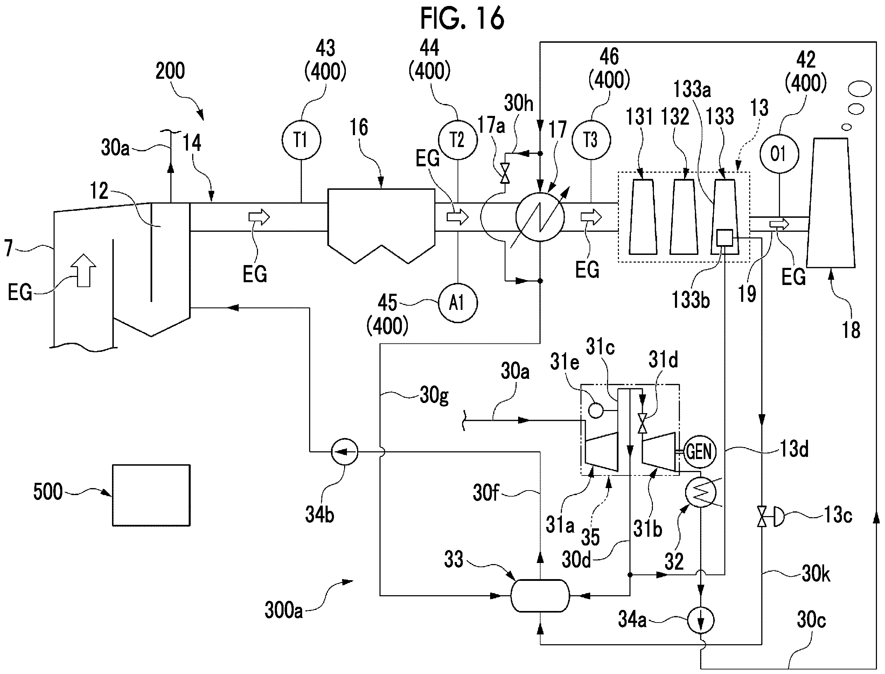

As shown in Fig. 16, the power generation system 300a includes a steam turbine 35, a condenser 32, a deaerator 33, a water supply pump 34, various lines, and various valves.

### (Steam turbine)

The steam turbine 35 according to this embodiment includes a first steam turbine 31a, a second steam turbine 31b, an inter-stage line 31c, and a pressure regulating valve 31d.

The first steam turbine 31a is a rotating machine driven by steam (main steam) from the boiler 12. Steam generated in the boiler 12 is introduced into the first steam turbine 31a through the main steam line 30a in the present embodiment. The main steam line 30a connects the steam outlet of the boiler 12 and the steam inlet of the first steam turbine 31a. The second steam turbine 31b is a rotary machine that is driven by steam from the first steam turbine 31a and rotates a generator GEN connected to the second steam turbine 31b.

The inter-stage line 31c connects the steam outlet of the first steam turbine 31a and the steam inlet of the second steam turbine 31b. That is, the steam in which the expansion work is completed in the first steam turbine 31a is guided to the second steam turbine 31b through the inter-stage line 31c. Hereinafter, the steam flowing through the inter-stage line 31c is referred to as "discharged steam". Therefore, the discharged steam from the first steam turbine 31a is supplied into the second steam turbine 31b through the inter-stage line 31c. The inter-stage line 31c and the deaerator 33 are connected by the extraction steam line 30d.

The pressure regulating valve 31d is disposed on the second steam turbine 31b side with respect to the connection portion between the inter-stage line 31c and the extraction steam line 30d in the inter-stage line 31c. The term "in the inter-stage line 31c" as used herein means "in the middle of the inter-stage line 31c" instead of "inside the inter-stage line 31c". The pressure regulating valve 31d can adjust the pressure of the discharged steam flowing through the inter-stage line 31c. The opening degree of the pressure regulating valve 31d in the present embodiment is controlled by the control device 500b. Specifically, the pressure regulating valve 31d receives a signal indicating the opening degree from the control device 500b through wired communication or wireless communication. The pressure regulating valve 31d adjusts the pressure of the discharged steam flowing through the inter-stage line 31c based on the opening degree indicated by the signal.

### (Condenser)

The condenser 32 is connected to the second steam turbine 31b. The steam that has finished the expansion work in the second steam turbine 31b is guided into the condenser 32, cooled, and condensed into water (feed water), and the water is stored in the condenser 32.

Here, the steam introduction line 13d connected to the reboiler 133b of the regeneration tower 133 in the carbon dioxide recovery device 13 is connected to the extraction steam line 30d. The discharged steam from the first steam turbine 31a flowing through the extraction steam line 30d is introduced into the reboiler 133b through the steam introduction line 13d as the extraction steam of the steam turbine 35. The extraction steam drawn into the reboiler 133b is used as a heat medium for heating the absorbing liquid in the regeneration tower main body 133a.

### (Sensor)

The sensor 400 according to this embodiment includes the camera 41, the oxygen concentration detection unit 42, the first temperature sensor 43, the second temperature sensor 44, the third temperature sensor 46, the nitrogen oxide concentration detection unit 45, and the pressure sensor 31e.

The pressure sensor 31e can detect the pressure of the discharged steam flowing through the inter-stage line 31c. The pressure sensor 31e is disposed on the first steam turbine 31a side with respect to the pressure regulating valve 31d in the inter-stage line 31c. The pressure sensor 31e detects the pressure of the discharged steam at a predetermined time interval, and transmits a signal indicating the detection result to the control device 500c in a wired or wireless manner.

### (Control device)

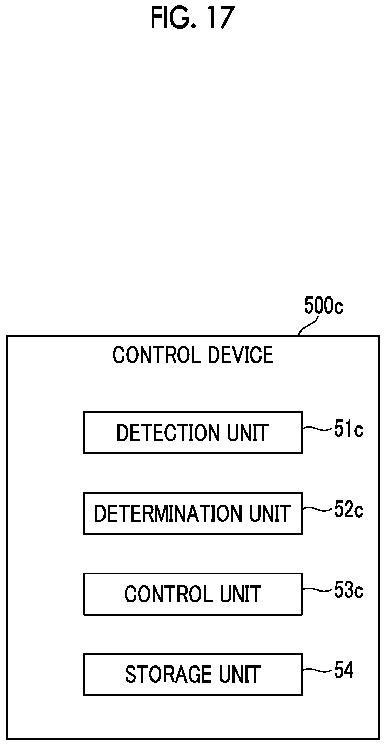

As shown in Fig. 17, a control device 500c according to this embodiment includes a detection unit 51c, a determination unit 52c, a control unit 53c, and a storage unit 54.

### (Detection unit)

By receiving the signal transmitted from the pressure sensor 31e, the detection unit 51c acquires the pressure of the steam flowing through the inter-stage line 31c indicated by the signal. The detection unit 51c transmits the acquired pressure to the determination unit 52c.

### (Determination unit)

In a case where the determination unit 52c receives the pressure from the detection unit 51c, the determination unit 52c determines whether or not the pressure is out of the predetermined steam pressure threshold value range or is within the steam pressure threshold value range.

The determination unit 52c determines that "the pressure is out of the steam pressure threshold value range" in a case where the pressure is out of the steam pressure threshold value range. Further, the determination unit 52c determines that the pressure is "low pressure" in a case where the pressure is smaller than the lower limit value of the steam pressure threshold value range. In addition, the determination unit 52c determines that the pressure is "high pressure" in a case where the pressure is higher than the upper limit value of the steam pressure threshold value range. As the lower limit value of the steam pressure threshold value range, for example, a value equal to or larger than the lower limit value of the pressure range of the minimum necessary pressure described in the first embodiment is employed. As the upper limit value of the steam pressure threshold value range, for example, a value equal to or lower than the upper limit value of the pressure range of the minimum required pressure is employed.

On the other hand, the determination unit 52c determines that "the steam pressure is within the predetermined threshold value range" in a case where the pressure is within the predetermined threshold value range. The term "within the steam pressure threshold value range" as used herein means that the steam pressure is within the upper limit value and the lower limit value of the steam pressure threshold value range. The steam pressure threshold value range is stored in advance, for example, by the storage unit 54.

### (Control unit)

The control unit 53c controls the opening degree of the pressure regulating valve 31d in a case where it is determined that the pressure is "out of the steam pressure range".

Specifically, in a case where the determination unit 52c determines that the pressure is "high", the control unit 53c transmits a signal indicating an increase in the opening degree to the pressure regulating valve 31d. In addition, in a case where the determination unit 52c determines that the pressure is "low", the control unit 53c transmits a signal indicating the decrease in the opening degree to the pressure regulating valve 31d. With this, the pressure of the discharged steam (extraction steam) from the first steam turbine 31a is adjusted.

In addition, in a case where it is determined that "the opening degree is in or out of the steam pressure range", the control unit 53c transmits a signal indicating the maintenance of the opening degree to the pressure regulating valve 31d.

### (Operation of control device)

Subsequently, an operation of the control device 500c will be described.

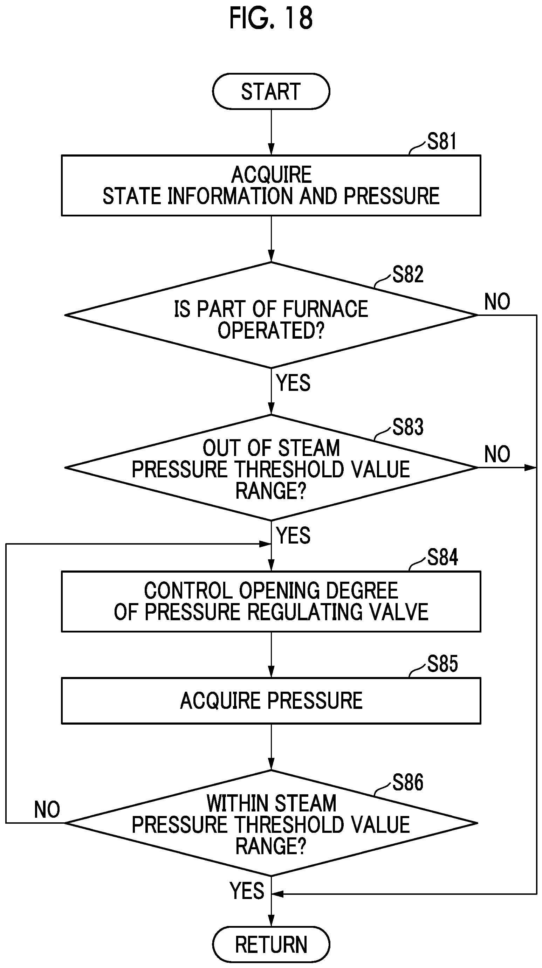

Hereinafter, with reference to Fig. 18, an example of the operation of the control device 500c that controls the pressure regulating valve 31d based on the state information and the pressure will be described.

The detection unit 51c acquires the state information and the pressure (step S81). Next, the determination unit 52c determines whether the state is the part of furnace operation or the all-operation based on the acquired state information (step S82).

In a case where the determination unit 52c determines that the operation is the part of furnace operation (step S82: YES), the determination unit 52c determines whether or not the acquired pressure is in the outside of the steam pressure range or in the inside of the steam pressure range (step S83). In a case where the determination unit 52c determines that the operation is the full operation (step S82: NO), the process in step S81 is performed again.

In a case where the determination unit 52c determines that the pressure is out of the steam pressure range (step S83: YES), the control unit 53c controls the opening degree of the pressure regulating valve 31d (step S84). In a case where the determination unit 52c determines that the steam pressure is within the steam pressure range (step S83: NO), the process in step S81 is performed again.

Next, the detection unit 51c acquires the pressure (Step S85). Next, the determination unit 52c determines whether or not the acquired pressure is in the steam pressure range or is out of the steam pressure range (step S86). In a case where the determination unit 52c determines that the steam pressure is within the steam pressure range (step S86: YES), the process in step S81 is performed again. In a case where the determination unit 52c determines that the steam pressure is out of the range (step S86: NO), the process in step S84 is performed again.

The processes of step S81 to step S86 described above are repeatedly executed in the operation stage of the power generation facility 1000.

### (Operations and effects)

In a case where the power generation facility 1000 is in the part of furnace operation, the pressure of the steam flowing through the inter-stage line 31c is lower than that in a case where the power generation facility 1000 is in the all furnace operation. That is, the pressure of the extraction steam is reduced. According to the above configuration, in a case where the operation state of the power generation facility 1000 is a part of furnace operation and the pressure detected by the pressure sensor 31e is out of the predetermined range of the steam pressure threshold value, the opening degree of the pressure regulating valve 31d is controlled by the control unit 53c. As a result, the pressure of the steam from the first steam turbine 31a flowing through the inter-stage line 31c can be kept within the steam pressure threshold value range. That is, the pressure of the steam supplied into the reboiler 133b through the steam introduction line 13d from the extraction steam line 30d connected to the inter-stage line 31c can be kept within a certain range. As a result, the pressure of the steam supplied into the reboiler 133b can be stabilized regardless of the operation state of the power generation facility 1000, and the absorbing liquid can be stably regenerated in the regeneration tower 133.

### (Other embodiments)

While the embodiments of the present disclosure have been described above in detail with reference to the drawings, specific configurations are not limited to the configurations of each embodiment, and additions, omissions, and substitutions of the configurations and other changes can be made without departing from the concept of the present disclosure.

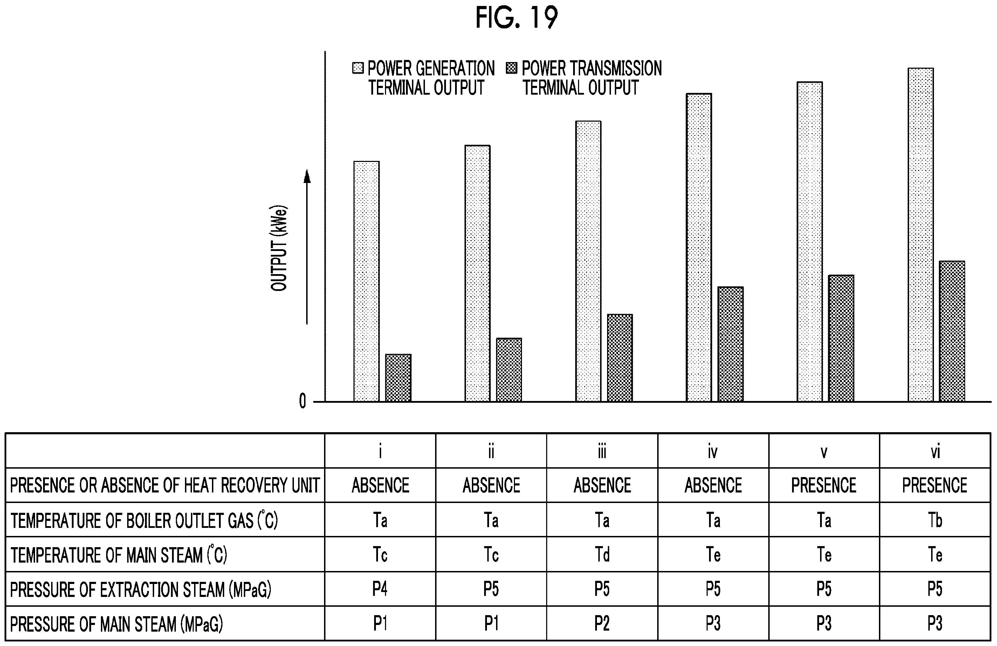

Here, Fig. 19 shows a table in which the presence or absence of the heat recovery unit 17, the boiler outlet gas temperature (°C), the temperature of the main steam (°C), the pressure (MPaG) of the extraction steam, and the pressure (MPaG) of the main steam correspond to each other. In the present example, a table shows 6 patterns (i to vi) as an example. The "presence or absence of the heat recovery unit" means whether or not the heat recovery unit 17 is disposed in the exhaust gas flow path 14. "Boiler outlet gas temperature (°C)" means a temperature of the exhaust gas EG before flowing into the economizer 15 that has flowed out from the boiler 12. The "main steam" means steam flowing through the main steam line 30a. "Extraction steam" means steam flowing through the extraction steam line 30d. As shown in the table, Ta and Tb, which are two types of boiler outlet gas temperatures, have different values, and a relationship of Ta > Tb is established. The temperatures indicated by Ta and Tb are, for example, in a range of 100°C to 200°C. The three types of temperatures of the main steam, that is, Tc, Td, and Te are values different from each other, and Tc < Td < Te is satisfied. The temperatures indicated by Tc, Td, and Te are, for example, in a range of 350°C to 550°C. The three types of pressures of the main steam, P1, P2, and P3, are values different from each other, and P1 < P2 < P3 is satisfied. The pressures indicated by P1, P2, and P3 are, for example, in a range of 2.0 MPaG to 12.0 MPaG. The two types of pressures of the extraction steam, P4 and P5, are values different from each other, and P4 > P5 is established. The pressures indicated by P4 and P5 are in a range of 0.50 MPaG to 2.0 MPaG.

The two types of bar graphs shown corresponding to each pattern indicate the power generation terminal output and the power transmission terminal output. Power generation terminal output means power (output) generated by a generator GEN connected to the steam turbines 31 and 35. The transmission end output means power (output) finally sold to the power system from the power generation facility 1000. From the graph, it can be seen that the disposition of the heat recovery unit 17 in the exhaust gas flow path 14 improves both the power generation terminal output and the power transmission terminal output. In addition, it can be seen that the higher the boiler outlet gas temperature, the temperature of the main steam, and the pressure of the main steam, the better both the power generation terminal output and the power transmission terminal output. In addition, it can be seen that the lower the pressure of the extraction steam is, the better both the power generation terminal output and the power transmission terminal output are.

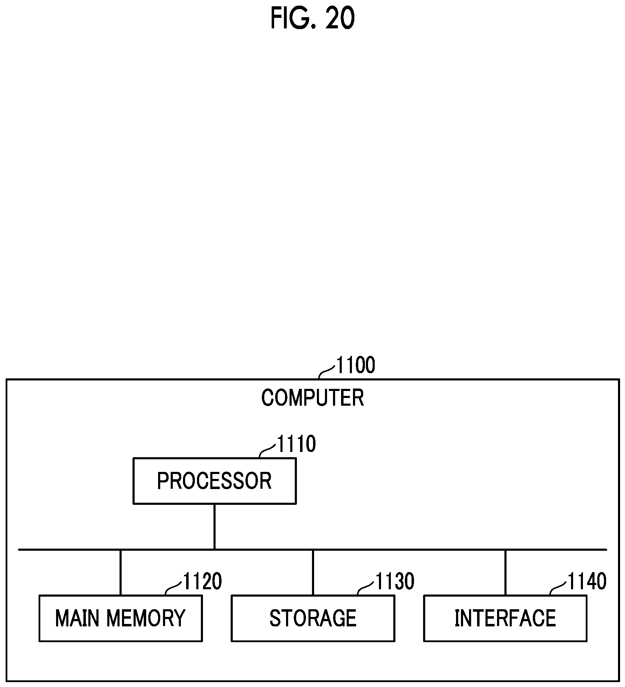

Fig. 20 is a hardware configuration diagram illustrating a configuration of a computer 1100 according to the present embodiment. A computer 1100 includes a processor 1110, a main memory 1120, a storage 1130, and an interface 1140.

The control devices 500, 500a, 500b, and 500c described above are mounted on the computer 1100. An operation of each of the processing units described above is stored in the storage 1130 in a form of a program. The processor 1110 reads the program from the storage 1130, deploys the read program in the main memory 1120, and executes the above-described process in accordance with the program. Further, the processor 1110 ensures a storage area corresponding to each storage unit 54 described above in the main memory 1120 in accordance with the program.

The program may be a program for realizing some of functions fulfilled by the computer 1100. For example, the program may fulfill a function in combination with another program previously stored in the storage 1130, or in combination with another program installed in another device. In addition, the computer 1100 may include a custom large scale integrated circuit (LSI) such as a programmable logic device (PLD) in addition to or in place of the above configuration. Examples of the PLDs include a programmable array logic (PAL), a generic array logic (GAL), a complex programmable logic device (CPLD), and a field-programmable gate array (FPGA). In this case, functions that are realized by the processor 1110 may be partially or entirely realized by the integrated circuit.

As an example of the storage 1130, a magnetic disk, a magneto-optical disk, or a semiconductor memory can be used. The storage 1130 may be an internal medium directly connected to a bus in the computer 1100 or may be an external medium connected to the computer 1100 via the interface 1140 or via a communication line. In addition, in a case where this program is distributed to the computer 1100 via the communication line, the computer 1100 receiving the distributed program may deploy the program in the main memory 1120 to execute the above-described process. In the above-described embodiment, the storage 1130 is a non-transitory tangible storage medium.

In addition, the program may be a program for realizing some of the above-described functions. In addition, the program may be a so-called difference file (difference program) that realizes the above-described functions in combination with another program previously stored in the storage 1130.

In addition, in the embodiment, the control device 500 controls the adjustment device such that the air ratio is controlled to be 1.1 or more and 1.25 or less, whereby the nitrogen oxide concentration A1 of the nitrogen oxides in the exhaust gas EG from the incinerator 1 is suppressed. In the above embodiment, instead of the above-described configuration, the nitrogen oxide concentration A1 in the exhaust gas EG from the incinerator 1 may be suppressed by supplying a denitration material such as ammonia water (NH₃) or urea water (CH₄N₂O) into the exhaust gas EG flowing in the furnace 7 of the incinerator 1 to denitrate the exhaust gas EG. In addition, the configurations may be combined.

In addition, in the embodiment, the power generation system 300 may further include the boiler feed water valve described above. This boiler feed water valve is disposed in the boiler water supply line 30f. In this case, the boiler feed water valve is a flow rate regulation valve that can adjust the flow rate of water flowing through the boiler water supply line 30f. The opening degree of the boiler feed water valve is controlled to adjust the flow rate of water flowing through the boiler water supply line 30f. The opening degree of the boiler feed water valve is controlled by the control device 500. Specifically, the boiler feed water valve receives a signal indicating the opening degree from the control device 500 through wired communication or wireless communication, and adjusts the opening degree based on the received signal.

The boiler feed water valve can adjust the flow rate of water flowing through the boiler water supply line 30f by being controlled by the control device 500. By adjusting the opening degree of the boiler feed water valve, the flow rate of the water as the heat medium flowing into the boiler 12 is adjusted.

In this case, in a case where the determination units 52 and 52c of the control device 500 determine that "the first temperature T1 is high" or "the second temperature T2 is high", the control units 53, 53a, 53b, and 53c of the control device 500 may transmit a signal indicating an increase in the opening degree to the boiler feed water valve, and in a case where the determination units 52 and 52c determine that "the first temperature T1 is low" or "the second temperature T2 is low", the control units 53, 53a, 53b, and 53c may transmit a signal indicating a decrease in the opening degree to the boiler feed water valve. In addition, in this case, in a case where the determination unit 52 or 52c determines that "the adjustment of the first temperature T1 is not necessary" and determines that "the adjustment of the second temperature T2 is not necessary", the control units 53, 53a, 53b, and 53c transmit a signal indicating the maintenance of the opening degree to the boiler feed water valve.

Therefore, the configuration of controlling the amount of the heat medium introduced into the boiler 12 is not limited to the configuration described in the embodiment.

In addition, the configuration of the power generation facility 1000 described in each embodiment is not limited to an independent configuration, and the power generation facility 1000 may be configured by appropriately combining the components described in each embodiment.

In addition, in the embodiment, the incinerator 1 of the waste treatment system 100 in the power generation facility 1000 is the stoker type incinerator, but is not limited to the stoker type incinerator. The waste treatment system 100 may be, for example, a kiln stoker furnace, a biomass fluidized bed boiler, a sludge incinerator, or the like.

### [Appendix]

The power generation facility, the exhaust gas treatment system, and the exhaust gas treatment method described in each embodiment are understood, for example, as follows.

(1) A power generation facility 1000 according to a first aspect is a power generation facility 1000 that incinerates materials W to be incinerated to generate power, the power generation facility including an incinerator 1 that incinerates the materials W to be incinerated, a boiler 12 into which exhaust gas EG generated in the incinerator 1 is supplied, a carbon dioxide recovery device 13 into which the exhaust gas EG that has passed through the boiler flows, an exhaust gas flow path 14 provided between the boiler and the carbon dioxide recovery device 13, an adjustment device configured to adjust a flow rate of the exhaust gas EG flowing through the exhaust gas flow path 14 to a target flow rate and adjust a temperature of the exhaust gas EG to a target temperature, a sensor 400 provided in the power generation facility 1000, and control devices 500, 500a, 500b, 500c that control the adjustment device based on a detection result of the sensor 400.

Accordingly, the state of the exhaust gas EG flowing through the exhaust gas flow path 14 can be stabilized as compared with a case in which the flow rate and the temperature of the exhaust gas EG from the incinerator 1 are not adjusted to the target flow rate and the target temperature. Therefore, for example, an external device or the like that uses the exhaust gas EG flowing through the exhaust gas flow path 14 can smoothly use the heat of the exhaust gas EG. In addition, since the state of the exhaust gas EG is stabilized, carbon dioxide can be stably recovered from the exhaust gas EG in the carbon dioxide recovery device 13.

(2) The power generation facility 1000 according to a second aspect is the power generation facility 1000 according to the first aspect, in which the adjustment device may supply the materials W to be incinerated and combustion air into the incinerator 1, the sensor 400 may have a camera 41 configured to acquire thermal image information indicating a combustion state of the materials W to be incinerated in the incinerator 1, and the control devices 500, 500a, 500b, 500c may control one or more of a supply state of the materials W to be incinerated supplied into the incinerator 1 and a supply state of the combustion air supplied into the incinerator 1, by controlling the adjustment device based on the thermal image information.

Accordingly, the flow rate and the temperature of the exhaust gas EG can be set to the target flow rate and the target temperature with higher accuracy.

(3) The power generation facility 1000 according to a third aspect is the power generation facility 1000 according to the second aspect, in which the sensor 400 may have an oxygen concentration detection unit 42 configured to detect an oxygen concentration O1 of the exhaust gas EG, and the control devices 500, 500a, 500b, 500c may control an amount of the combustion air supplied into the incinerator 1 such that an air ratio obtained from the oxygen concentration O1 is 1.1 or more and 1.25 or less, by controlling the adjustment device based on a detection result of the oxygen concentration detection unit 42.

As a result, for example, the nitrogen oxide concentration A1 of the nitrogen oxides contained in the exhaust gas EG can be suppressed as compared with a case in which the air ratio is maintained to be 1.3 or more.

(4) The power generation facility 1000 according to a fourth aspect is the power generation facility 1000 according to any one of the first aspect to the third aspect, further including a dust collecting device 16 disposed in the exhaust gas flow path 14, in which the boiler 12 may be configured to perform heat exchange between the exhaust gas EG and a heat medium, the sensor 400 may have one or more of a first temperature sensor 43 configured to detect a first temperature T1 of the exhaust gas EG flowing into the dust collecting device 16 and a second temperature sensor 44 configured to detect a second temperature T2 of the exhaust gas EG that has flowed out from the dust collecting device 16, and a nitrogen oxide concentration detection unit 45 configured to detect a nitrogen oxide concentration A1 in the exhaust gas EG flowing through the exhaust gas flow path 14, and the control devices 500, 500a, 500b, 500c may control an amount of the heat medium supplied into the boiler 12 based on correspondence relationship information in which the nitrogen oxide concentration A1 and one or more of the first temperature T1 and the second temperature T2 are associated with each other.

(5) The power generation facility 1000 according to a fifth aspect is the power generation facility 1000 according to any one of the first aspect to the third aspect, further including a dust collecting device 16 disposed in the exhaust gas flow path 14, in which the adjustment device may have an economizer 15 disposed in the exhaust gas flow path 14 on an upstream side with respect to the dust collecting device 16 and configured to perform heat exchange between the exhaust gas EG and a heat medium, the sensor 400 may have one or more of a first temperature sensor 43 configured to detect a first temperature T1 of the exhaust gas EG flowing into the dust collecting device 16 and a second temperature sensor 44 configured to detect a second temperature T2 of the exhaust gas EG that has flowed out from the dust collecting device 16, and a nitrogen oxide concentration detection unit 45 configured to detect a nitrogen oxide concentration A1 in the exhaust gas EG flowing through the exhaust gas flow path 14, and the control devices 500, 500a, 500b, 500c may control an amount of the heat medium supplied into the economizer 15 based on correspondence relationship information in which the nitrogen oxide concentration A1 and one or more of the first temperature T1 and the second temperature T2 are associated with each other.

Accordingly, the temperature of the exhaust gas EG passing through the dust collecting device 16 can be adjusted to the temperature based on the nitrogen oxide concentration A1. Therefore, the denitration performance of the exhaust gas EG in the dust collecting device 16 can be further stabilized.

(6) The power generation facility 1000 according to a sixth aspect is the power generation facility 1000 according to any one of the first aspect to the fifth aspect, further including a dust collecting device 16 disposed in the exhaust gas flow path 14, in which the adjustment device may have a heat recovery unit 17 disposed in the exhaust gas flow path 14 on a downstream side with respect to the dust collecting device 16 and configured to perform heat exchange between the exhaust gas EG and a heat medium, the sensor 400 may have a third temperature sensor 46 configured to detect a third temperature T3 of the exhaust gas EG that has flowed out from the heat recovery unit 17, and the control devices 500, 500a, 500c may control an amount of the heat medium supplied into the heat recovery unit 17 based on the third temperature T3.

Accordingly, it is possible to further stabilize the temperature of the exhaust gas EG from the heat recovery unit 17 to the carbon dioxide recovery device 13 in the exhaust gas flow path 14.

(7) The power generation facility 1000 according to a seventh aspect is the power generation facility 1000 according to any one of the first aspect to the fifth aspect, further including a dust collecting device 16 disposed in the exhaust gas flow path 14, in which the adjustment device may have a heat recovery unit 17 disposed in the exhaust gas flow path 14 on a downstream side with respect to the dust collecting device 16 and configured to perform heat exchange between the exhaust gas EG and a heat medium, an economizer 15 disposed in the exhaust gas flow path 14 on an upstream side with respect to the dust collecting device 16 and configured to perform heat exchange between the exhaust gas EG and the heat medium, a bypass line 20 of which one end 20a is connected to the exhaust gas flow path 14 between the boiler 12 and the economizer 15 and another end 20b is connected to the exhaust gas flow path 14 between the economizer 15 and the dust collecting device 16, and a flow rate adjuster 21 disposed in the bypass line 20 and configured to adjust a flow rate of the exhaust gas EG flowing through the bypass line 20, the sensor 400 may have a third temperature sensor 46 configured to detect a third temperature T3 of the exhaust gas EG flowing through the exhaust gas flow path 14 on a downstream side with respect to the heat recovery unit 17, and the control device 500a may control an opening degree of the flow rate adjuster 21 based on the third temperature T3.

Accordingly, it is possible to further stabilize the temperature of the exhaust gas EG flowing into the carbon dioxide recovery device 13.

(8) The power generation facility 1000 according to an eighth aspect is the power generation facility 1000 according to any one of the first aspect to the fifth aspect, further including a dust collecting device 16 disposed in the exhaust gas flow path 14, in which the adjustment device may have an economizer 15 disposed in the exhaust gas flow path 14 on an upstream side with respect to the dust collecting device 16 and configured to perform heat exchange between the exhaust gas EG and a heat medium, a heat recovery unit 17 disposed in the exhaust gas flow path 14 between the economizer 15 and the dust collecting device 16 and configured to perform heat exchange between the exhaust gas EG and the heat medium, a bypass line 20 of which one end 20a is connected to the exhaust gas flow path 14 between the economizer 15 and the heat recovery unit 17 and another end 20b is connected to the exhaust gas flow path 14 between the heat recovery unit 17 and the dust collecting device 16, and a flow rate adjuster 21 disposed in the bypass line 20 and configured to adjust a flow rate of the exhaust gas EG flowing through the bypass line 20, the sensor 400 may have one or more of a first temperature sensor 43 configured to detect a first temperature T1 of the exhaust gas EG flowing into the dust collecting device 16 and a second temperature sensor 44 configured to detect a second temperature T2 of the exhaust gas EG that has flowed out from the dust collecting device 16, and a nitrogen oxide concentration detection unit 45 configured to detect a nitrogen oxide concentration A1 in the exhaust gas EG flowing through the exhaust gas flow path 14 on a downstream side with respect to the dust collecting device 16, and the control device 500b may control an opening degree of the flow rate adjuster 21 based on correspondence relationship information in which the nitrogen oxide concentration A1 and one or more of the first temperature T1 and the second temperature T2 are associated with each other.

Accordingly, it is possible to further stabilize the temperature of the exhaust gas EG flowing into the dust collecting device 16.

(9) The power generation facility 1000 according to a ninth aspect is the power generation facility 1000 according to any one of the first aspect to the eighth aspect, further including a dust collecting device 16 disposed in the exhaust gas flow path 14, steam turbines 31, 35 that are driven by supply of main steam from the boiler, a condenser 32 into which discharged steam from the steam turbines 31, 35 flows, a connection line through which water from the condenser 32 is guidable to the adjustment device as a heat medium, a deaerator 33 that deaerates dissolved gas from water from the adjustment device, using extraction steam from the steam turbines 31, 35, and a boiler water supply line 30f through which the deaerated water is guidable to the boiler, in which the adjustment device may have a heat recovery unit 17 disposed in the exhaust gas flow path 14 on a downstream side with respect to the dust collecting device 16 and configured to perform heat exchange between the exhaust gas EG and the heat medium.

Accordingly, the adjustment device does not need to receive the heat medium from a device other than the condenser 32. Therefore, it is not necessary to separately provide a device for generating a heat medium for supply into the adjustment device.

(10) The power generation facility 1000 according to a tenth aspect is the power generation facility 1000 according to the ninth aspect, further including a first line 30b that connects the boiler and the steam turbine 31 and through which the main steam is guidable to the carbon dioxide recovery device 13 from a main steam line 30a through which the main steam flows, a first valve 13a disposed in the first line 30b, a second line 30e that connects the steam turbine 31 and the deaerator 33 and through which the extraction steam is guidable to the carbon dioxide recovery device 13 from an extraction steam line 30d through which the extraction steam flows, and a second valve 13b disposed in the second line 30e, in which the carbon dioxide recovery device 13 may have a cooling tower 131 that cools the exhaust gas EG, an absorption tower 132 that causes an absorbing liquid to absorb carbon dioxide contained in the cooled exhaust gas EG, and a regeneration tower 133 that heats the absorbing liquid that has absorbed the carbon dioxide, by a reboiler 133b into which the main steam and the extraction steam are supplied by connection of the first line 30b and the second line 30e, to separate the carbon dioxide from the absorbing liquid, and the control devices 500, 500a, 500b may control one of the first valve 13a and the second valve 13b to be in a closed state based on an operation state of the power generation facility 1000.

With this, the steam supplied into the steam turbine 31 and the steam extracted from the steam turbine 31 can be used in accordance with the operation state of the power generation facility 1000, and as a result, the amount of power generation by the steam turbine 31 can be increased.

(11) The power generation facility 1000 according to an eleventh aspect is the power generation facility 1000 according to the ninth aspect, further including a steam introduction line 13d that connects the steam turbine 35 and the deaerator 33 and through which the extraction steam is guidable to the carbon dioxide recovery device 13 from an extraction steam line 30d through which the extraction steam flows, in which the steam turbine 35 may have a first steam turbine 31a into which the main steam is supplied, a second steam turbine 31b into which discharged steam from the first steam turbine 31a is supplied, an inter-stage line 31c that connects the first steam turbine 31a and the second steam turbine 31b and through which the discharged steam from the first steam turbine 31a flows, and a pressure regulating valve 31d disposed in the inter-stage line 31c and configured to regulate a pressure of the discharged steam flowing through the inter-stage line 31c, the carbon dioxide recovery device 13 may have a cooling tower 131 that cools the exhaust gas EG, an absorption tower 132 that causes an absorbing liquid to absorb carbon dioxide contained in the cooled exhaust gas EG, and a regeneration tower 133 that heats the absorbing liquid that has absorbed the carbon dioxide, by a reboiler 133b into which the discharged steam is supplied as the extraction steam by connection of the steam introduction line 13d, to separate the carbon dioxide from the absorbing liquid, and the control device 500c may control an opening degree of the pressure regulating valve 31d based on an operation state of the power generation facility 1000.

Accordingly, the pressure of the steam supplied into the reboiler 133b through the steam introduction line 13d from the extraction steam line 30d connected to the inter-stage line 31c can be adjusted in accordance with the operation state of the power generation facility 1000.

(12) An exhaust gas treatment system according to a twelfth aspect is an exhaust gas treatment system provided as a part of a facility in which exhaust gas EG is generated, the exhaust gas treatment system including an exhaust gas flow path 14 through which the exhaust gas EG generated by the facility flows, a carbon dioxide recovery device 13 into which the exhaust gas EG that has flowed through the exhaust gas flow path 14 flows, an adjustment device configured to adjust a flow rate of the exhaust gas EG flowing through the exhaust gas flow path 14 to a target flow rate and adjust a temperature of the exhaust gas EG flowing through the exhaust gas flow path 14 to a target temperature, and control devices 500, 500a, 500b, 500c that control the adjustment device based on a detection result of a sensor 400 provided in the facility.

(13) An exhaust gas treatment method according to a thirteenth aspect is an exhaust gas treatment method used for a facility in which exhaust gas EG is generated, the facility including an exhaust gas flow path 14 through which the exhaust gas EG flows, a carbon dioxide recovery device 13 into which the exhaust gas EG that has flowed through the exhaust gas flow path 14 flows, and an adjustment device configured to adjust a flow rate of the exhaust gas EG flowing through the exhaust gas flow path 14 to a target flow rate and adjust a temperature of the exhaust gas EG flowing through the exhaust gas flow path 14 to a target temperature, and the exhaust gas treatment method including controlling the adjustment device based on a detection result of a sensor 400 provided in the facility.

### Industrial Applicability

According to the present disclosure, it is possible to provide a power generation facility, an exhaust gas treatment system, and an exhaust gas treatment method that can more efficiently operate while stably recovering carbon dioxide in exhaust gas.

### Reference Signs List

1: incinerator
2: furnace main body
3: fuel supply mechanism
4: stoker
4a: stoker surface
5: wind box
5a: drying stage
5b: combustion stage
5c: post-combustion stage
6: discharge chute
7: furnace
8: forced draft fan
9: primary air line
10: air preheater
11: secondary air line
12: boiler
13: carbon dioxide recovery device
13a: first valve
13b: second valve
13c: third valve
13d: steam introduction line
14: exhaust gas flow path
15: economizer
16: dust collecting device
17: heat recovery unit
17a: heat medium valve
18: chimney
18a: waste pit
19: outlet flow path
19a: ash extrusion device
19b: ash pit
20: bypass line
20a: one end
20b: other end
21: flow rate adjuster
30: hopper
30a: main steam line
30b: first line
30c: first connection line
30d: extraction steam line
30e: second line
30f: boiler water supply line
30g: second connection line
30h: water supply bypass line
30i: third connection line
30j: fourth connection line
30k: condensation water line
31, 35: steam turbine
31a: first steam turbine
31b: second steam turbine
31c: inter-stage line
31d: pressure regulating valve
31e: pressure sensor
32: condenser
33: deaerator
34a: first water supply pump
34b: second water supply pump
41: camera
42: oxygen concentration detection unit
43: first temperature sensor
44: second temperature sensor
45: nitrogen oxide concentration detection unit
46: third temperature sensor
51, 51c: detection unit
52, 52c: determination unit
53, 53a, 53b, 53c: control unit
54: storage unit
81: first forced draft fan
82: second forced draft fan
90: primary air damper
100: waste treatment system
110: secondary air damper
131: cooling tower
132: absorption tower
133: regeneration tower
133a: regeneration tower main body
133b: reboiler
180: waste pit main body
181: platform
182: crane
183: rail
184: girder
185: trolley
186: wire
187: winch
188: grapple
189: crane control device
190: extrusion device main body
200, 200a, 200b: exhaust gas treatment configuration
300, 300a: power generation system
301: inlet portion
302: outlet portion
302a: floor surface
310: feeder
311: upper surface
312: extrusion surface
400: sensor
500, 500a, 500b, 500c: control device
1000: power generation facility
1100: computer
1110: processor
1120: main memory
1130: storage
1140: interface
Da: transfer direction
Dal: one side
Dar: other side
Dv: vertical direction
Dvd: upper side
Dvu: lower side
Dw: furnace width direction
EG: exhaust gas
F: bright flame
GEN: generator
O1: oxygen concentration
R: storage space
S1: first control step
S2: second control step
T: waste collecting vehicle
T1: first temperature
T2: second temperature
T3: third temperature
Al: nitrogen oxide concentration
V: treatment space
W: materials to be incinerated, waste

## Claims

1. A power generation facility that incinerates materials to be incinerated to generate power, the power generation facility comprising:
an incinerator in which the materials to be incinerated are incinerated;
a boiler into which exhaust gas generated in the incinerator is supplied;
a carbon dioxide recovery device into which the exhaust gas that has passed through the boiler flows;
an exhaust gas flow path provided between the boiler and the carbon dioxide recovery device;
an adjustment device configured to adjust a flow rate of the exhaust gas flowing through the exhaust gas flow path to a target flow rate and adjust a temperature of the exhaust gas to a target temperature;
a sensor provided in the power generation facility; and
a control device that controls the adjustment device based on a detection result of the sensor.

2. The power generation facility according to claim 1,
wherein the adjustment device supplies the materials to be incinerated and combustion air into the incinerator,
the sensor has a camera configured to acquire thermal image information indicating a combustion state of the materials to be incinerated in the incinerator, and
the control device controls one or more of a supply state of the materials to be incinerated supplied into the incinerator and a supply state of the combustion air supplied into the incinerator, by controlling the adjustment device based on the thermal image information.

3. The power generation facility according to claim 2,
wherein the sensor has an oxygen concentration detection unit configured to detect an oxygen concentration of the exhaust gas, and
the control device controls an amount of the combustion air supplied into the incinerator such that an air ratio obtained from the oxygen concentration is 1.1 or more and 1.25 or less, by controlling the adjustment device based on a detection result of the oxygen concentration detection unit.

4. The power generation facility according to claim 1, further comprising:
a dust collecting device disposed in the exhaust gas flow path,
wherein the boiler is configured to perform heat exchange between the exhaust gas and a heat medium,
the sensor has
one or more of a first temperature sensor configured to detect a first temperature of the exhaust gas flowing into the dust collecting device and a second temperature sensor configured to detect a second temperature of the exhaust gas that has flowed out from the dust collecting device, and
a nitrogen oxide concentration detection unit configured to detect a nitrogen oxide concentration in the exhaust gas flowing through the exhaust gas flow path, and
the control device controls an amount of the heat medium supplied into the boiler based on correspondence relationship information in which the nitrogen oxide concentration and one or more of the first temperature and the second temperature are associated with each other.

5. The power generation facility according to claim 1, further comprising:
a dust collecting device disposed in the exhaust gas flow path,
wherein the adjustment device has an economizer disposed in the exhaust gas flow path on an upstream side with respect to the dust collecting device and configured to perform heat exchange between the exhaust gas and a heat medium,
the sensor has
one or more of a first temperature sensor configured to detect a first temperature of the exhaust gas flowing into the dust collecting device and a second temperature sensor configured to detect a second temperature of the exhaust gas that has flowed out from the dust collecting device, and
a nitrogen oxide concentration detection unit configured to detect a nitrogen oxide concentration in the exhaust gas flowing through the exhaust gas flow path, and
the control device controls an amount of the heat medium supplied into the economizer based on correspondence relationship information in which the nitrogen oxide concentration and one or more of the first temperature and the second temperature are associated with each other.

6. The power generation facility according to claim 1, further comprising:
a dust collecting device disposed in the exhaust gas flow path,
wherein the adjustment device has a heat recovery unit disposed in the exhaust gas flow path on a downstream side with respect to the dust collecting device and configured to perform heat exchange between the exhaust gas and a heat medium,
the sensor has a third temperature sensor configured to detect a third temperature of the exhaust gas that has flowed out from the heat recovery unit, and
the control device controls an amount of the heat medium supplied into the heat recovery unit based on the third temperature.

7. The power generation facility according to claim 1, further comprising:
a dust collecting device disposed in the exhaust gas flow path,
wherein the adjustment device has
a heat recovery unit disposed in the exhaust gas flow path on a downstream side with respect to the dust collecting device and configured to perform heat exchange between the exhaust gas and a heat medium,
an economizer disposed in the exhaust gas flow path on an upstream side with respect to the dust collecting device and configured to perform the heat exchange between the exhaust gas and the heat medium,
a bypass line of which one end is connected to the exhaust gas flow path between the boiler and the economizer and another end is connected to the exhaust gas flow path between the economizer and the dust collecting device, and
a flow rate adjuster disposed in the bypass line and configured to adjust a flow rate of the exhaust gas flowing through the bypass line,
the sensor has a third temperature sensor configured to detect a third temperature of the exhaust gas flowing through the exhaust gas flow path on a downstream side with respect to the heat recovery unit, and
the control device controls an opening degree of the flow rate adjuster based on the third temperature.

8. The power generation facility according to claim 1, further comprising:
a dust collecting device disposed in the exhaust gas flow path,
wherein the adjustment device has
an economizer disposed in the exhaust gas flow path on an upstream side with respect to the dust collecting device and configured to perform heat exchange between the exhaust gas and a heat medium,
a heat recovery unit disposed in the exhaust gas flow path between the economizer and the dust collecting device and configured to perform the heat exchange between the exhaust gas and the heat medium,
a bypass line of which one end is connected to the exhaust gas flow path between the economizer and the heat recovery unit and another end is connected to the exhaust gas flow path between the heat recovery unit and the dust collecting device, and
a flow rate adjuster disposed in the bypass line and configured to adjust a flow rate of the exhaust gas flowing through the bypass line,
the sensor has
one or more of a first temperature sensor configured to detect a first temperature of the exhaust gas flowing into the dust collecting device and a second temperature sensor configured to detect a second temperature of the exhaust gas that has flowed out from the dust collecting device, and
a nitrogen oxide concentration detection unit configured to detect a nitrogen oxide concentration in the exhaust gas flowing through the exhaust gas flow path on a downstream side with respect to the dust collecting device, and
the control device controls an opening degree of the flow rate adjuster based on correspondence relationship information in which the nitrogen oxide concentration and one or more of the first temperature and the second temperature are associated with each other.

9. The power generation facility according to claim 1, further comprising:
a dust collecting device disposed in the exhaust gas flow path;
a steam turbine that is driven by supply of main steam from the boiler;
a condenser into which discharged steam from the steam turbine flows;
a connection line through which water from the condenser is guidable to the adjustment device as a heat medium;
a deaerator that deaerates dissolved gas from water from the adjustment device, using extraction steam from the steam turbine; and
a boiler water supply line through which the deaerated water is guidable to the boiler,
wherein the adjustment device has a heat recovery unit disposed in the exhaust gas flow path on a downstream side with respect to the dust collecting device and configured to perform heat exchange between the exhaust gas and the heat medium.

10. The power generation facility according to claim 9, further comprising:
a first line that connects the boiler and the steam turbine and through which the main steam is guidable to the carbon dioxide recovery device from a main steam line through which the main steam flows;
a first valve disposed in the first line;
a second line that connects the steam turbine and the deaerator and through which the extraction steam is guidable to the carbon dioxide recovery device from an extraction steam line through which the extraction steam flows; and
a second valve disposed in the second line,
wherein the carbon dioxide recovery device has
a cooling tower that cools the exhaust gas,
an absorption tower that causes an absorbing liquid to absorb carbon dioxide contained in the cooled exhaust gas, and
a regeneration tower that heats the absorbing liquid that has absorbed the carbon dioxide, by a reboiler into which the main steam and the extraction steam are supplied by connection of the first line and the second line, to separate the carbon dioxide from the absorbing liquid, and
the control device controls one of the first valve and the second valve to be in a closed state based on an operation state of the power generation facility.

11. The power generation facility according to claim 9, further comprising:
a steam introduction line that connects the steam turbine and the deaerator and through which the extraction steam is guidable to the carbon dioxide recovery device from an extraction steam line through which the extraction steam flows,
wherein the steam turbine has
a first steam turbine into which the main steam is supplied,
a second steam turbine into which discharged steam from the first steam turbine is supplied,
an inter-stage line that connects the first steam turbine and the second steam turbine and through which the discharged steam from the first steam turbine flows, and
a pressure regulating valve disposed in the inter-stage line and configured to regulate a pressure of the discharged steam flowing through the inter-stage line,
the carbon dioxide recovery device has
a cooling tower that cools the exhaust gas,
an absorption tower that causes an absorbing liquid to absorb carbon dioxide contained in the cooled exhaust gas, and
a regeneration tower that heats the absorbing liquid that has absorbed the carbon dioxide, by a reboiler into which the discharged steam is supplied as the extraction steam by connection of the steam introduction line, to separate the carbon dioxide from the absorbing liquid, and
the control device controls an opening degree of the pressure regulating valve based on an operation state of the power generation facility.

12. An exhaust gas treatment system provided as a part of a facility in which exhaust gas is generated, the exhaust gas treatment system comprising:
an exhaust gas flow path through which the exhaust gas generated by the facility flows;
a carbon dioxide recovery device into which the exhaust gas that has flowed through the exhaust gas flow path flows;
an adjustment device configured to adjust a flow rate of the exhaust gas flowing through the exhaust gas flow path to a target flow rate and adjust a temperature of the exhaust gas flowing through the exhaust gas flow path to a target temperature; and
a control device that controls the adjustment device based on a detection result of a sensor provided in the facility.

13. An exhaust gas treatment method used for a facility in which exhaust gas is generated, the facility including
an exhaust gas flow path through which the exhaust gas flows,
a carbon dioxide recovery device into which the exhaust gas that has flowed through the exhaust gas flow path flows, and
an adjustment device configured to adjust a flow rate of the exhaust gas flowing through the exhaust gas flow path to a target flow rate and adjust a temperature of the exhaust gas flowing through the exhaust gas flow path to a target temperature, and the exhaust gas treatment method comprising:
controlling the adjustment device based on a detection result of a sensor provided in the facility.
